(19) Europäisches Patentamt
European Patent Office
Office européen des brevets

(11) Publication number: 0 117 478
B1

# (12) EUROPEAN PATENT SPECIFICATION

(45) Date of publication of patent specification: 28.09.88

(21) Application number: 84101476.4

(22) Date of filing: 14.02.84

(51) Int. Cl.[4]: **C 08 F 251/00,** C 08 G 81/02, B 01 J 39/22, B 01 J 47/12, B 01 J 20/32

## (54) Modified polysaccharide supports.

(30) Priority: 14.02.83 US 466114

(43) Date of publication of application: 05.09.84 Bulletin 84/36

(45) Publication of the grant of the patent: 28.09.88 Bulletin 88/39

(84) Designated Contracting States: BE CH DE FR GB IT LI NL SE

(56) References cited:
FR-A-2 273 816
FR-A-2 293 914
GB-A-1 157 300
US-A-3 885 069
US-A-3 983 299
US-A-4 070 348
US-A-4 198 326
US-A-4 281 233
US-A-4 384 957

(73) Proprietor: AMF INCORPORATED
World Headquarters 777 Westchester Avenue
White Plains New York 10604 (US)

(72) Inventor: Hou, Kenneth C.
14 Hunting Ridge Road
South Glastonbury Connecticut 06073 (US)
Inventor: Liao, P.
109 Vern Wood
Vern Connecticut 06073 (US)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relatss to a modified polysaccharide material, a process for preparing same, a self-supporting cellulosic fibrous matrix which comprises same and a process for effecting chromatographic separation.

The broad applicability of ion exchange chromatography, which ranges from separation of inorganic and organic ions to that of protein molecules and other biomolecules, has made it a powerful and versatile tool for chemical and biochemical separations. The technique was originally limited to the use of natural products such as cellulose, clay and other minerals containing mobile ions that would exchange with ionic materials in the surrounding solute phase. Because of the low exchange capacity of these natural products, however, practical utilisation thereof was limited, and synthetic organic polymers capable of exchanging ions were developed.

Among the first generation of synthetic ion exchange materials were the ion exchange resins. The fundamental framework of these ion exchange resins is an elastic three-dimensional hydrocarbon network comprising ionizable groups, either cationic or anionic, chemically bonded to the backbone of a hydrocarbon framework. The network is normally fixed, insoluble in common solvents and is chemically inert. The ionizable functional groups attached to the matrix carry active ions which can react with or can be replaced by ions in the solute phase. Therefore, the ions in the solute phase can be easily exchanged for the ions initially bound to the polymeric resins. Typical examples of commercially available ion exchange resins are the polystyrenes cross-linked with DVB (divinylbenzene), and the methacrylates copolymerized with DVB. In the case of polystyrene, a three-dimensional network is formed first, and the functional groups are then introduced into benzene rings through chloromethylation. Since ion exchange resins are elastic three-dimensional polymers, they have no definite pore size; only a steadily increasing resistance of the polymer network limits the uptake of ions and molecules of increasing size.

The resistance to flow exhibited by these resins is controlled by the degree of crosslinking. With a low degree of crosslinking, the hydrocarbon network is more easily stretched, the swelling is large, and the resin exchanges small ions rapidly and even permits relatively large ions to undergo reaction. Conversely, as the crosslinking is increased, the hydrocarbon matrix is less resilient, the pores of the resin network are narrowed, the exchange process is slower, and the exchanger increases its tendency to exclude large ions from entering the structure. The ion exchange resins made from polymeric resins have been successfully applied for the removal of both organic and inorganic ions from aqueous media but they are normally unsuitable for the separation of biopolymers such as proteins. This is due, among others, to the following reasons:

(1) The highly crosslinked structure of the resins has rather narrow pores to accommodate the diffusion of proteins; the proteins therefore are virtually restricted to the macrosurface area of the beads with consequent limitation of solute loadings;

(2) The high charge density close to the proximity of the resin surface is unsuitable, since it causes excessive binding and distortion of protein structure;

(3) The hydrocarbon matrix is usually hydrophobic and is potentially dangerous to the subtle three-dimensional structure of biopolymers, often causing denaturation of proteins.

The next generation of chromatographic materials useful for separation of proteins and other labile biological substances was based on cellulose ion exchangers. These lacked nonspecific adsorption and had practicable pore structure. Such prior art ion exchange celluloses are made by attaching substituent groups with either basic or acidic properties to the cellulose molecule by esterification, etherification, or oxidation reactions. Examples of cationic exchange celluloses are carboxymethylated cellulose (CM), succinic half esters of cellulose, sulfoethylated cellulose, and phosphorylated cellulose. Examples of anionic exchange celluloses are diethylaminoethyl cellulose (DEAE), and triethylaminoethyl cellulose (TEAE). Ion exchange materials based on cellulose as the principal backbone or anchoring polymer, however, have not enjoyed complete success due primarily to an inherent property of cellulose: its affinity for water. Thus, prior art ion exchange materials based on cellulose, while typically having high exchange capacity, are difficult to use as a consequence of their tendency to swell, gelatinize or disperse on contact with an aqueous solution. An ideal ion exchange material should minimally interact with the solvent system which carries the ions in solution through its pores; only in this manner is it possible to obtain a rapid, free flowing ion exchange system.

A third generation of ion exchange materials, which were developed to solve some of these problems, were the ion exchange gels. These gels comprise large pore gel structures and include the commercially known material Sephadex®, which is a modified dextran. The dextran chains are crosslinked to give a three-dimensional polymeric network. The functional groups are attached by ether linkages to the glucose units of the dextran chains. Proteins are not denatured by the hydrophilic polymeric network. Sephadex® exhibits very low nonspecific adsorption, which makes it ideal as a matrix for biological separations. However, the porosity of ion exchange gels is critically dependent on its swelling properties, which in turn is affected by the environmental ionic strength, pH and the nature of the counter-ions. Swelling of gels in buffer is caused primarily by the tendency of the functional groups to become hydrated. The amount of swelling is directly proportional to the number of hydrophilic functional groups attached to the gel matrix, and is inversely proportional to the degree of crosslinking present in the gel. This characteristic swelling is

a reversible process, and at equilibrium there is a balance between two forces: (1) the tendency of the gel to undergo further hydration, and hence to increase the osmotic pressure within the gel beads, and (2) the elastic forces of the gel matrix. The osmotic pressure is attributed almost entirely to the hydration of the functional groups, and, since different ions have different degrees of hydration, the particular counter ions in an ion exchange gel can be expected to have a considerable influence upon the degree of swelling. Since the pH, the electrolyte concentration and the nature of the counter-ion can all affect the hydration, leading to a different degree of gel swelling, the pore size in the gels is not in well defined form but is rather dependent on the environmental conditions. Gels without crosslinking provide large pores and high capacity due to maximum swelling. They suffer, however, from the weakness of structure integrity and can easily be crushed with a minimum amount of pressure. Removal of the solvent from the gels often results in collapse of the matrix. Highly cross-linked gels have mechanical strength, but loose capacity and pore size due to restrictions in swelling.

Ion exchange gels made from synthetic polymers have also been used, and they include crosslinked polyacrylamide (Bio-Gel P®), microreticular forms of polystyrene (Styragel®), poly(vinyl acetate) (Merck-o-Gel OR®), crosslinked poly(2-hydroxy ethylmethacrylate) (Spheron®), and polyacryloylmorpholine (Enzacryl®). All of these follow the general trend: it may be possible to obtain dimensional stability with high flow rate or, alternatively, high capacity with swelling. It is, however, not possible to obtain both capacity and high flow rate at the same time.

The failure of single components to have both capacity and dimensional stability led to yet another generation of ion exchange materials comprising composite structures, e.g., hybrid gels. Hybrid gels are made by combining a semi-rigid component, for the purpose of conferring mechanical stability, with a second component, a softer network, which is responsible for carrying functional groups. Agarose gel, which would otherwise be very soft and compressible, can be made stronger through hybridizing with cross-linked polyacrylamide. The crosslinked polyacrylamide component is mechanically stronger than the agarose, improves the gel flow properties, and reduces the gel swelling, but it sacrifices molecular fractionation range. Examples of hybrid gels other than polyacrylamide/agarose (Ultrogels®), are polyacryloylmorpholine and agarose (Enzacryl®), and composite polystyrenes with large pore polystyrenes as a framework filled with a second type of lightly crosslinked polymer.

Yet another composite gel structure is achieved by combining inorganic materials coated with organics, and are the types known as Spherosil®. Porous silica beads are impregnated with DEAE dextran so that the product will have the mechanical properties of silica, with the ion exchange properties of DEAE dextrans. These composites, however, have severe channeling defects arising out of particle packing, and they have capacity limitations on the coated surfaces.

Totally rigid inorganic supports such as porous silica or porous glass which are not susceptible to degradation have also been used to provide high porosity, and high flow rate systems. The major problem, however, is nonspecific adsorption of proteins due to the silanol groups on the silica surface. Since the hydrolysis of silica is directly related to the pH conditions, the nonspecific adsorption by silica is minimal at neutral pH, but increases as the pH changes both to the acidic or alkaline ranges. A monolayer coating by either hydrophilic organic polymers or silanization has been used in an attempt to overcome this problem.

In the technique of affinity chromatography, which enables the efficient isolation of biological macromolecules or biopolymers, by utilizing their recognition sites for certain supported chemical structures with a high degree of selectivity, the prior art has also utilized materials of varying chemical structure as supports. For example, agarose gels and crosslinked agarose gels have been the most widely used support materials. Their hydrophilicity makes them relatively free of nonspecific binding, but their compressibility make them less attractive as carriers in large scale processing, such as in manufacturing. Controlled-pore glass (CPG) beads have also been used in affinity chromatography. Although high throughputs can be obtained with columns packed with CPG, this carrier is even more expensive than agarose gel beads. Cellulose particles have also been used by immunochemists for synthetic affinity sorbents. However, compared to agarose gels, cellulose particles are formed with more difficulty and therefore, have received less attention in the preparation of affinity sorbents for enzymes. Cellulose, however, is perhaps the least expensive of all-support matrices. Two lesser used support matrices are polyacrylamide gel beads and Sephadex® gel beads made from dextran and epichlorohydrin. Although convenient methods have been developed for using them, the softness of these beads yields poor column packings, and their low molecular porosity yields a sorbent with poor ligand availability to the ligate.

US—A—4,281,233 show supports for affinity chromatography which comprise copolymers of hydroxy alkyl acrylates or methacrylates with cross-linking monomers. The copolymers contain covalently attached mono- or oligosaccharides. (An oligosaccharide is defined in the art as having up to nine saccharide units. See, e.g., Roberts, J. D., and Caserio, M. C., Basic Principles of Organic Chemistry, 1964, p. 615).

A carrier for bio-active materials is also disclosed in US—A—4,352,884. Said carrier comprises a substrate coated with a copolymer. The substrate may be one of various materials, including inorganic materials such as glass, silica, alumina, synthetic high polymers such as polystyrene and polyethylene, and naturally occurring high polymers such as cellulose. The copolymer is made of a hydrophilic acrylate or methacrylate monomer which is a hydroxy or alkoxy alkyl acrylate or methacrylate, and a copolymerizable unsaturated carboxylic acid or amine. The base material or substrate is coated with the copolymer by conventional coating or deposition procedures, such as spraying, dipping or phase separation. The

copolymer may also contain small amounts of a cross-linking agent such as glycidyl acrylate or methacrylate. The cross-linking agent allows for cross-linking treatment after the coating process, and provides for the prevention of elution (presumably of the bioactive materials) from the coating layer. The amounts of cross-linking agent are quite small, and range between 0.5 and 1 percent by weight of the total copolymer weight. Such amounts of cross-linking agent are insufficient to cause substantial covalent bonding or grafting of the copolymer onto the underlying substrate. The copolymer is thus essentially only physically coating the underlying substrate. Physical coating, however, is accompanied by a series of problems. The carrier would not be expected to have an even distribution of the copolymer, would show a multilayered structure, and may have a possible uneven distribution of functional groups.

Another reference of interest is US—A—4,070,348, which shows copolymers of glycidyl- and amino-containing acrylates, useful as carriers for biologically active substances, such as polysaccharides, enzymes, peptides, hormones, etc. The structure of the final product is that of an acrylic copolymer chain covalently modified at a multiplicity of sites thereon with substances such as enzymes and proteins.

This review of the prior art, its advantages and drawbacks, leads to the conclusion that there exists a need for a support useful both for ion exchange and affinity chromatography-based purification which will have high stability, high porosity, low non-specific adsorption, high flow rate, poor compressibility, controlled gelation, and which will be useful for industrial-scale biological separations. It is at the industrial level of manufacturing, especially, where the aforementioned drawbacks have had their most important effect and where this need is the strongest.

Industrial scale molecular separation materials comprising fibrous matrices with particulate immobilized therein have been described in US—A—4,384,957. This application describes a composite fiber material formed by wet laying a sheet from an aqueous slurry of particulate, small refined fiber pulp and long soft fiber pulp. The purpose of the soft long fiber is to physically hold clumps of particulate material and refined pulp together. Sheets are formed from a wet slurry by vacuum filtration, wherein the long fibers form in a plane which is perpendicular to the direction of flow of the chromatographic carrier fluid. This permits channels to form in the composite material, which are perpendicular to the direction of flow, and allows these materials to serve as internal flow distributors. The resulting matrix structure has proven to be an effective way of eliminating channeling defects through internal flow distribution mechanisms.

Using a fibrous/particulate matrix with addition of cationic polymers to the slurry and crosslinking the polymers to the matrices by oven drying has yielded a filtration matrix with a positive charge coated on the surface thereof. Such charged matrices can be used for filtering minute amounts of impurities from large volumes of liquid by adsorption, as described in, for example, US—A—4,007,113, 4,007,114, 4,305,782 and 4,309,247.

It is inevitable in prior art wet slurrying processes with slurries comprising cationic materials, to obtain materials having uneven distribution of charges, wherein multilayer coating may occur in one spot, whereas other spots on the surface may be bare. Such products are acceptable in filtration processes due to the fact that the amount of impurities needed to be removed is relatively small compared to the bulk liquid volume, and that uneven charge distributions can be compensated by the depth of the filters. However, such products cannot readily be applied to delicate ion exchange processes. The number of active sites, as well as the accessibility of the active sites, are critical to the capacity of such process.

FR—A—273816 discloses a method for binding biologically active proteins onto an insoluble carrier by reacting the protein in an aqueous phase with the carrier. The carrier comprises an activated polysaccharide having a hydrophilic graft copolymer grafted thereto.

US—A—4,198,326 discloses modified graft copolymers of cellulose with monovinyl monomers containing ionic groups or non-ionic groups capable of being converted to ionic groups. The graft copolymers are modified with divinylbenzene.

US—A—4,281,233 discloses hydrophilic macroporous three-dimensional copolymers of hydroxyalkyl methacrylates or hydroxyalkyl acrylates cross-linked with monomers which contain covalently attached saccharides.

Neither the ion exchange or affinity chromatography supports commonly used in laboratory scale purifications, nor the particulate (or ion exchange modified particulate) containing fibrous matrices for chromatography or filtration have proven to be of great use in scale-up of delicate purification processes.

It is therefore the object of the present invention to provide a modified polysaccharide material useful in industrial scale ion exchange, affinity chromatography or reverse phase processes, which will be noncompressible, controllably swellable, have high exchange capacity, exhibit high flow rates and be versatile, and a process for producing same.

Another object of the invention is to provide a self-supporting cellulosic fibrous matrix.

Still another object of the invention is to provide a process for effecting chromatographic separation by ion exchange, affinity chromatography, and reverse phase chromatography.

Said objects are achieved by a modified polysaccharide material which comprises (1) a water-insoluble polysaccharide covalently bonded to a synthetic polymer; (2) said synthetic polymer comprising a copolymer made from a free-radical polymerization of (a) a polymerizable compound containing an epoxy group capable of direct covalent coupling to a hydroxy group of said polysaccharide, and a vinyl group capable of free-radical polymerization; and (b) a polymerizable compound having the formula:

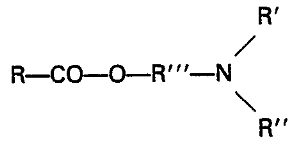

wherein R is an alpha, beta-ethylenically unsaturated polymerizable radical, R′ and R″ are the same or different $C_1$—$C_6$ alkyl or alkanoyl groups, and R‴ is a direct bond or a $C_2$—$C_3$ alkyl group, wherein R′ and R″ taken together with the N-atom may form a heterocyclic ring, and a process for preparing said modified polysaccharide material which comprises (1) polymerizing said compound (a) with said compound (b) in the presence of said polysaccharide, under temperature conditions insufficient to cause the covalent binding of said compound (a) to said polysaccharide, to thereby form a synthetic polymer of (a) and (b), (2) reacting said polysaccharide with the chemical group of compound (a) in said synthetic polymer under temperature conditions sufficient to cause said covalent bonding.

Another object of the invention has been attained by providing a self-supporting cellulose fibrous matrix which comprises said modified polysaccharide material.

Furthermore, a process for effecting chromatographic separation of at least two compounds of a sample is provided comprising contacting said sample with a self-supporting fibrous matrix comprising said modified polysaccharide material.

Figure 1 is a diagram showing (A) an anion exchange cellulose derivatized by a prior art approach which yields one cationic site per saccharide unit and (B) an anion exchange cellulose derivatized by the approach of the invention which yields multiple cationic sites per saccharide unit.

Figure 2 shows the derivatized anion exchange cellulose of Figure 1(B) after further crosslinking or quaternization.

Figure 3 shows the separation of gamma globulin type I(A), gamma globulin type II(B), and albumin (C), as per Example 7.

Figure 4 shows results obtained in the elution of bound transferrin by pH shift using a DEAE cartridge, as per Example 8.

Figure 5 shows the adsorption capacities for bovine IgG at various pH's as per Example 9.

Figure 6 shows plasma fractionation using a quaternized cartridge medium as per Example 11.

The present invention is related to the discovery and development of materials useful as insoluble supports for a variety of application including a wide range of chromatographic separations, including affinity separations, or even as insoluble supports for bioreactors.

The support materials are based on a composite of an organic synthetic polymer and a polysaccharide. In its most used embodiment the composite per se is biologically inert. The organic synthetic polymer carries chemical groups which are capable of coupling to said polysaccharide, and also carries chemical groups which can provide ion exchange capacity, which can provide anchoring capacity for affinity ligands or for biologically active molecules in general.

The invention also relates to ion exchange materials obtained from the modified polysaccharide which are obtained by further reaction with cross-linking agents, and/or by further reactions such as chemical ionization, or unmasking of potentially masked ion exchange groups.

The invention also relates to materials derived from the modified polysaccharide by attaching thereto affinity ligands or biomolecules, to thereby obtain affinity chromatography or bioreactive materials, or attaching thereto hydrophobic substituents for reverse phase chromatography.

The invention also relates to mixtures of the aforementioned materials with unmodified polysaccharides, with modified or unmodified particulate material, or mixtures thereof to give a variety of separation media.

The term "polysaccharide" as used in the specification and claims is meant to include compounds made up of many—hundreds or even thousands—monosaccharide units per molecule. These units are held together by glycoside linkages. Their molecular weights are normally higher than about 5,000 and up into the millions of daltons. They are normally naturally occurring polymers, such as, for example, starch, glycogen, cellulose, gum arabic, agar and chitin. The polysaccharide should have one or more reactive hydroxy groups. It may be straight or branched chain. The most useful of the polysaccharides for the purposes of this invention is cellulose.

The polysaccharide is preferably fully unprotected and carries all of its hydroxy groups in the free state. Some blocking of the hydroxy groups is possible, as for example by acylation or aminoacylation. Extensive blocking of the hydroxy groups of the polysaccharide, however, is undesirable since the polysaccharide thereby loses its hydrophilic character, which is necessary to provide appropriate chemically compatible interaction with biomolecules. If the polysaccharide becomes too hydrophobic, negative interactions with such molecules as proteins leads to possible non-specific bonding and denaturation phenomena. Also, if the masking of the polysaccharide hydroxy groups is too extensive, the reactivity of the resulting material with the polymer is greatly diminished. For all of these reasons, it is preferred to retain substantially all hydroxy groups in the free state. The polysaccharide may, however, be chemically activated.

Cellulose is the preferred polysaccharide. By "cellulose" is intended to mean any of the convenient and commercially available forms of cellulose such as wood pulp, cotton, hemp, ramie, or regenerated forms

such as rayon. There exists no criticality as to the selection of a suitable form of cellulose. Cellulose is a naturally occurring polysaccharide consisting of B(1—4) linked glucose units. In the native state, adjacent cellulose chains are extensively hydrogen bonded forming microcrystalline regions. These regions are interspersed by amorphous regions with less hydrogen-bonding. Limited acid hydrolysis results in preferential loss of the amorphous regions and gives so-called microcrystalline cellulose. The cellulose useful in the present invention is either cellulose in the native state, or in the microcrystalline state. Also, cellulose derived from cotton linter is better than that derived from wood pulp, as the latter contains lignin.

Chemical reactions to attach the polymer to the polysaccharide material normally proceed with difficulty in crystalline regions but take place more readily in amorphous regions. For example, the substitution of functional groups into cellulose has a disruptive effect on the structure thereof. If carried out to completion, the cellulose matrix would be destroyed and ultimately water soluble polymers would be formed. Typical examples of this phenomenon are the hydroxyethyl cellulose and cellulose gums of the prior art, which become the commonly used adhesives and binders after dissolving in water.

Each anhydrous saccharide unit in a polysaccharide molecule may have three or more reactive hydroxy groups. Theoretically, all three or more can be substituted with the polymer. The product from such reaction, however, would have a degree of substitution of three or more, which in the case of ion exchange materials, would render it soluble. Even at levels of substitution below those at which total water solubility occurs, such polysaccharide derivatives become unsuitable as chromatographic supports. Therefore, substitution of the polysaccharide is restricted to the more reactive centers of the amorphous regions and is seldom carried out beyond the level of about 1mEQ/g of dry weight in fiber form. At this level of substitution, the native configuration of the polysaccharide structure is only slightly modified, and the low density non-uniform exchange sites are readily accessible to large biomolecules.

The final structure of a molecular support of the invention thus comprises a polysaccharide chain covalently modified at a multiplicity of sites along such chain with the synthetic polymers.

The polymer which modifies the polysaccharide is a copolymer. In its most general form, the copolymer could be a random, a block or an alternating copolymer.

The polymerizable compound (a) (also called "comonomer (a)") has an epoxy group capable of direct covalent coupling to a hydroxy group of said polysaccharide with the formation of a covalent bond, and a vinyl group capable of free-radical polymerization. The chemical groups are capable of reacting with hydroxy groups at temperatures up to those at which the polysaccharide begins to decompose or depolymerize, e.g., 0° to 120°C, in aqueous solution and thereby form covalent bonds with the oxygen atoms of the hydroxy groups.

Representatives of comonomers are acrylic- and methacrylic anhydrides, acrylolylmethacryloyl N-hydroxy succinimides, omega-iodo-alkyl esters of acrylic or methacrylic acid in which the alkyl group in general contains 2 to 6 carbon atoms, allyl chloride, chloromethylstyrene, chloroacetoxy ethyl methacrylate, and compounds having a glycidyl group. The latter are ethers or esters formed between a glycidyl alcohol and an unsaturated alcohol or unsaturated carboxylic acid, respectively. The glycidyl alcohols are aliphatic and cycloaliphatic alcohols and ether alcohols having from 3 to 18 carbon atoms which are esterified with an alpha, beta-unsaturated carboxylic acid, preferably acrylic or methacrylic acid, or are etherified with an olefinically or acetylenically unsaturated alcohol. Typical compounds are glycidyl acrylate and methacrylate; 4,5-epoxy-pentylacrylate; 4-(2,3-epoxy-propyl)-N-butyl-methacrylate; 9,10-epoxystearylacrylate; 4-(2,3-epoxypropyl)-cyclohexyl methacrylate; ethylene glycol-monoglycidyl etheracrylate; and allyl glycidyl ether.

If the active monomer units (a) are sensitive to hydroxy groups, and if they do not react with the polysaccharide offered, they may be transformed, in the presence of water, into hydrophilic carboxy or hydroxy groups. The activated groups are therefore present in the polymeric material in generally greater number than is necessary for the bonding with the polysaccharide.

The polymerizable compound (a) may be one which does not react directly with hydroxy groups of the polysaccharide, but rather is convalently coupled to the polysaccharide indirectly, via a bridge compound. This is the case when the polysaccharide is first chemically activated as by oxidation, and reacted with a compound having an epoxy and a vinyl group, capable of reaction with an appropriate functionality of polymerizable comonomer (a).

Comonomer (b) is a carboxylate of an hydrocyl-amino derivative of the formula (1)

(1) 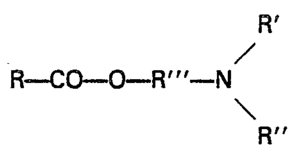

wherein R is an alpha, beta-ethylenically unsaturated polymerizable radical and R′ and R″ are identical or different $C_1$—$C_6$ alkyl or alkanoyl groups. R‴ is a direct bond (—) or a $C_2$—$C_3$ alkyl group. R′ and R″ together with the N atom may also form a heterocyclic ring. Typical compounds of this type are:

$CH_2{=}C(H \text{ or } CH_3){-}CO{-}O{-}N(C_2H_5)_2$

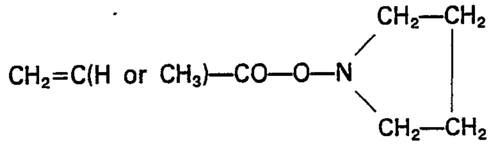

(2)

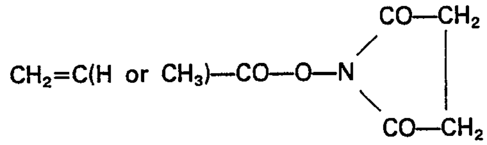

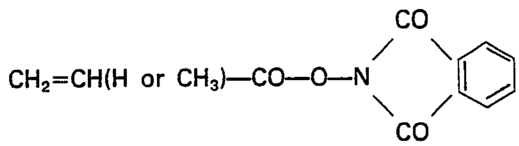

$CH_2{=}C(H \text{ or } CH_3){-}CO{-}O{-}C_2H_4{-}N(C_2H_5)_2$

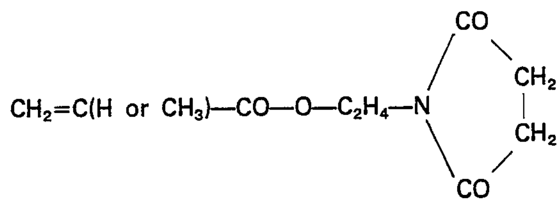

Other compounds having activated carboxyl groups include acryloyl- and methacryloyl chloride, acrylic and methacrylic anhydride, maleic anhydride, phenyl acrylate and methacrylate, glycidyl acrylate and methacrylate, 4-iodobutylacrylate and methacrylate and 2-isopropenyl-4,4-dimethyloxazolone-5. The last mentioned compound is capable of reacting with the terminal amino group of proteins.

The polymerizable comonomer (b) can be substantially of one type or can be a mixture of one or more types. This is particularly applicable when the ultimate use of the material is as an ion exchange carrier. Comonomers (b) can then contain such functional groups as anionic exchange groups and cationic exchange groups in various different ratios, if desired.

The preferred comonomer (a) for anionic exchange materials is glycidyl acrylate or methacrylate. The preferred comonomer (b) for anionic exchange materials is diethylaminoethyl acrylate or methacrylate. The most preferred comonomer (b) for anchoring materials is the comonomer obtained from reaction of glycidyl acrylate or methacrylate with glucose.

The preferred comonomer (a) for cationic exchange materials is aminoethyl methacrylate, coupled to the polysaccharide by previous oxidation thereof. The preferred comonomer (b) for cationic exchange materials is methacrylic acid, acrylic acid and acrylic acid dimer, or glycidyl methacrylate further oxidized to a carboxylic acid group after copolymerization.

The average molecular weight of the polysaccharide-modifying polymer is dependent on the number of monomers present therein. It is required to have at least a sufficient number of comonomers (a) so as to be able to form covalent attachment throughout amorphous regions of the polysaccharide surface. The number of comonomers (b) cannot be too small, since otherwise the exchange capacity, or the anchoring/interacting capacity is negligible. The number of comonomers (b) can neither be too high, since this would cause great difficulty in the reaction between the reactive groups of comonomer (a) and the polysaccharide. Preferably, the polysaccharide-modifying copolymer carries anywhere between 1 and 500 units (a) plus (b), most preferably between 20 and 100 units. This corresponds to molecular weights of between about 100 and 100,000, preferably between 1,000 and 10,000.

Other neutral comonomers (c), different than those represented by (b) can also be added to the polymer, if desired. These comonomers may be polymerizable unsaturated compounds carrying neutral chemical groups such as hydroxy groups, amide groups, alkyl groups and aryl groups. Preferred among comonomers (c) are $C_1$—$C_6$ alkyl acrylates or methacrylates, or the corresponding hydroxy alkyl acrylates or alkacrylates. The function of comonomers (c) may be to increase the presence of hydrophobic or hydrophilic residues in the polymers, so as to provide a desired balance of hydrophilic and hydrophobic groups, if necessary.

The minimum ratio of comonomer (a) to total comonomer content is important. The synthetic polymer should have a sufficient amount of comonomer (a) to permit substantial covalent coupling of the polymer to the polysaccharide. If too little comonomer (a) is present in the polymer, then grafting becomes difficult,

if not impossible. Generally, about 4—12, preferably 5—10% by weight of comonomer (a) relative to the total of (a) plus (b) (and (c) if any is present) is needed. Amounts of about 0.5 to 1 or 2% by weight appear to merely cross-link the polymer, without substantial grafting onto the polysaccharide.

The upper limit of comonomer (a) in the polymer can be varied up to 99.9% by weight, depending on the desired amount of rigidity, functionality and hydrophilicity. Increasing the amount of comonomer (a) too much above 15 to 20% by weight, however, decreases the porosity. Large molecules then have difficulty in gaining full access to the functional groups in comonomer (b). It is preferred to have a predominance of comonomers (b) over comonomers (a). Comonomers (c) may be present in an amount of up to 20 percent by weight of the total (a) plus (b) plus (c).

The weight ratio of polysaccharide to the modifying polymer is freely adjustable, and varies from 0.1 to 5 weight parts of copolymer to parts by weight of the polysaccharide.

When comonomers (b) carry ionizable chemical groups capable of providing cation exchange capacity, it is found that unless some degree of crosslinking is provided, the flexibility of the material in solution tends to favor the formation of micelle-type aggregates and slow loss of capacity. Therefore, it is a preferred mode of the invention to provide polymeric crosslinking for these types of modified polysaccharides. Crosslinking can be provided either by incorporating into the polymerization recipe a small amount of polyunsaturated comonomer having at least two polymerizable alpha, beta-carbon double bonds, such as for example mono- and polyethylene glycol dimethacrylates and diacrylates (with the polyethylene glycol residue containing up to 6 ethylene groups), ethylene dimethacrylate, ethylene diacrylate, tetramethylene dimethacrylate, tetraethylene diacrylate, divinylbenzene, triallyl cyanurate, methylene-bis-acrylamide or -bis-methacrylamide.

Another type of crosslinking agent is particularly applicable to copolymers made from an aminoalkyl comonomer (b). Because of the presence of a free pair of electrons on the aminoalkyl nitrogen atoms, crosslinking can be carried out with such bifunctional reagents as would react with nitrogen free electron pairs. Among these are the diacyl halides, such as

$$Hal—CO—(CH_2)_n—CO—Hal$$

or the alkyl dihalides, such as

$$Hal—(CH_2)_n—Hal,$$

wherein Hal is a halide such as chloride, bromide or iodide, and n may be anywhere between 2 and 12. Other bifunctional reagents capable of reaction with nitrogen atoms can also be used. The advantage of these bifunctional reagents is that they simultaneously cross-link the copolymer, while also providing a cationic charge at the nitrogen centers, thereby ionizing the material.

The amount of crosslinking agent is best determined empirically. It is to be considered sufficient when the polymer preserves the ion exchange capacity at a constant value over time, yet would be too high if swelling is prevented, and too much rigidity is obtained in the final materials. Ideally, an amount of crosslinking agent between 5 to 20 mole percent of the synthetic polymer units is sufficient.

By the term "afinity ligand" as used throughout the present application and in the claims, is meant to include any small or high molecular weight molecule which can be immobilized in a stationary phase and used to purify a complementary binding molecule from a solute phase by affinity chromatography. For example, a ligand can be an inhibitor, a cofactor, a prosthetic group, or a polymeric substrate, all of these useful to purify enzymes or holoenzymes. Other ligand/ligate pairs are enzyme/polymeric inhibitors; nucleic acid, single strand/nucleic acid, complementary strand; hapten or antigen/antibody; antibody/proteins or polysaccharides; monosaccharides or polysaccharides/lectins or receptors; lectins/glycoproteins or receptors; small target compounds/binding proteins; and binding protein/small target compounds. When antigen/antibody pairs are used as the ligand/ligate pair, the technique takes the particular name of "immunoaffinity" chromatography.

The "biologically active molecule" which can be bound to the carriers of the invention can include enzymes, enzyme substrates, inhibitors, hormones, antibiotics, antibodies, antigens, peptides, saccharides, nucleic acids, and the like. The only requirement for these molecules is that they have reactive groups thereon which can be covalently coupled to the anchoring chemical groups on comonomer (b).

Of particular interest is the immobilization of enzymes such a hydrolases, isomerases, proteases, amylases, and the like. These immobilized enzymes can then be used in biochemical reactors, as is otherwise well known in the art.

By the use of the term reverse phase chromatography or "hydrophobic interaction chromatography" is meant to include chromatography used to adsorb hydrophobic components in mixtures. Such components include lipids and cell fragments.

The carrier materials of the present invention can be used per se in the same manner as other polysaccharide-based carrier materials of the prior art. Alternatively, and in a preferred mode, the polysaccharide material, which is preferably in fibrous form after the modification, can be formed into a self-supporting fibrous matrix, such as a fibrous sheet, with ion exchange properties, affinity chromatography properties, bioreactive or reverse phase properties. The modified fibrous polysaccharide

fibrous media can also incorporate unmodified fibers of various different sizes, and, in addition, can also incorporate modified or unmodified particulate material.

The fibrous media comprises a porous matrix of fiber wherein, because of the nature of the present invention, the fiber is effective for molecular or ionic separations or molecular reactions. The matrix is substantially homogeneous with respect to each component. When a particulate is present, it is preferred to modify it so that it is also effective for molecular or ionic separations or reactions. Such a particulate should be contained in the fibrous phase in an effective amount to achieve the desired separations or reactions. The overall media is substantially inert and dimensionally stable.

The preferred particulates which can be used include all of those substances which can be provided in finely divided form and exhibit chromatographic functionality, i.e., capable of effective molecular separations and/or reactions. Mixtures of such compositions may also be utilized. Exemplary of such particulates are silica, alumina, zirconium oxide, diatomaceous earth, perlite, clays such as vermiculite, carbon such as activated carbon, modified polymer particulates such as other ion exchange resins, crystalline cellulose, molecular sieves, and the like, the surfaces of which may be modified in a conventional manner. Such materials are commercially available under a variety of trademarks such as Biosila, Hi-Flosil, Li Chroprep Si, Micropak Si, Nucleosil, Partisil, Porasil, Spherosil, Zorbax cil, Corasil, Pallosil, Zipax, Bondapak, LiChrosorb, Hypersil, Zorbax, Perisorb, Fractosil, Corning Porous Glass, Dowex and Amberlite resins.

Examples of references which describe particulates effective for molecular separations are US—A—3,669,841, 3,722,181, 3,795,313, 3,983,299, 4,029,583, 3,664,967, 4,053,565 and 4,105,426.

The particle size of the particulate is not critical but influences somewhat the flow rate at which the sample to be treated passes through the material. Usually, uniform particle sizes greater than about 5 µm are preferred, with about 10—100 µm constituting a practical operational range. The amount of the particulate can vary widely from about 10 wt.% up to 80 wt.% or more of the solid phase. The optimum particulate concentration will vary depending on the molecular separation desired.

The fibrous media should be capable of immobilizing the particulate contained therein, i.e., capable of preventing significant particulate loss from the stationary phase, yet having a porosity which enables the fluid to pass through the media. Thus, although the modified cellulose materials of the present invention are self-bonding and the addition of extra fibers or binders may not be necessary, it is possible to utilize such extra fibers or binders. Other fibers usable for the media include polyacrylonitrile fibers, nylon fibers, wool fibers, rayon fibers and polyvinyl chloride fibers, other cellulose fibers such as wood pulp and cotton, and cellulose acetate.

One embodiment of the invention is the provision of a fibrous media comprising two different types of celluloses: one a modified cellulose according to the invention and another an unmodified cellulose.

Another embodiment of the invention, which may also be coupled with the aforementioned celluloses is an unrefined structural fiber which assists in providing sheets of sufficient structural integrity in both the wet "as formed" condition, and in the final dry condition, and also allows handling during processing as well as suitability for the intended end use. Such fibers are typically relatively large, with commercially available diameters in the range of 6 to 60 µm. Wood pulp can also be used and has fiber diameters ranging from 15 to 25 µm and fiber lengths of about 0.85 to about 6.5 mm. The unrefined self-bonding structural fibers typically have a Canadian Standard Freeness of +400 to +800 ml. These long self-bonding fibers may constitute greater than 50% of the fibrous media, by weight, preferably 60—100% of the fibrous media, and most preferably 100%. Optionally, a minor portion of cellulose pulp which has been refined to a Canadian Standard Freeness of between +100 and −600 ml may be incorporated with a major portion of the normally dimensioned cellulose pulp (+400 to +800 ml). In particular, from about 1 to about 20% of the refined pulp and about 50% to about 90% of the unrefined cellulose may be contained in the matrix. Particulate may also be added.

When the particulate materials are millimicrometersized, it may be desirable to use, in addition, a mixture of cationic and anionic resins as described in U.S. Patent Application Serial Number 347,360. Alternatively, one may use a medium containing, in addition to the millimicron-sized particles, a neutral organic polymeric resin having oxygen atoms along the polymeric backbone thereof, as described in U.S. Patent Application Serial Number 401,361.

Also of particular interest in the present invention is the use of modified cellulosic fibrous media carrying modified inorganic support materials, such as for example are described in US—A—3,983,299, 3,795,313, 3,722,181, 4,034,139, 4,118,316, 4,029,583 or 4,108,603. In particular, it is possible to derivatize siliceous particles with silanes and attach thereto various ion exchange or anchoring groups. In this embodiment then, both the cellulosic fiber and the siliceous particulate are modified, and their interaction provides increased anchoring and/or ion exchange capacity. The addition of particulate material tends to increase the rigidity and strength of the fibrous media and renders it readily useful for industrial applications, especially those involving high pressure.

The polymer-modified polysaccharide material of the invention can be prepared in various modes. Generally speaking, in one mode, one can first prepare the polymer and then condense the same through its hydroxy reacting groups (if available) to the polysaccharide. Alternatively, in another mode, one can first react the polysaccharide with a hydroxy group-reactive comonomer (a) followed by copolymerization with comonomer (b) and any other comonomers (e.g., crosslinking comonomers, hydrophobic comonomers,

etc.), as desired. These reactions are therefore of two types: 1) coupling of saccharides to hydroxy reactive groups on comonomer (a), and 2) polymerization of polymerizable unsaturated compounds. The order in which these are carried out is not particularly critical.

Still a third method of (indirectly) attaching the synthetic polymer to the polysaccharide involves previous chemical activation of the polysaccharide. For example, polysaccharide can be treated with oxidizing agents such as periodate, hydrogen peroxide, ceric or other metallic oxidizing ions. Reaction of the activated polysaccharide with an amino-containing polymerizable monomeric compound followed by reduction, will normally yield derivatized polysaccharide-carrying unsaturated functionalities along the chain thereof. These unsaturated functionalities can then serve as further attachment positions for conjugating the polymer thereto.

Another type of chemical activation of the polysaccharide involves reaction with a compound such as a diepoxide or epichlorohydrin, which yields a derivatized polysaccharide-carrying epoxy or other groups along the chain thereof. These epoxy or other groups then serve as conjugating positions on the polysaccharide chains.

The chemical activation modes of (indirect) attachment of the polymer to polysaccharide are particularly useful when introducing negative (anionic) functionalities into the polymer. This is due to the fact that graft polymerization, which is a common way of conferring positive charge to polysaccharides such as cellulose, is not very effective when attempting to confer negative charges (present in carboxy, phosphoric, sulphonic groups, etc.) thereto.

Polymerization of comonomers is carried out by free radical polymerization.

Said free radical addition polymerization of radical polymerizable comonomers is carried out with free radical initiators using the well known steps of initiation, addition and termination. A usual procedure is to utilize a substance or substances which produce radicals capable of reacting with the monomers. Probably the simplest of all polymerization initiators are the organic peroxides and azo compounds. These substances decompose spontaneously into free radicals in common organic solvents at a finite rate, at temperatures between 50 and 140°C. For example, benzoyl peroxide decomposes into two benzoyloxy radicals at 60°C. Another example is afforded by the azo compound azo-bis-isobutyronitrile which similarly decomposes into radicals at easily accessible temperatures.

The necessary energy may also be provided by irradiating the initiator system with ultraviolet light. For example, initiation can be provided by irradiating the initiator system in the presence of photo initiators such as benzophenone and its derivatives, benzoin alkyl ethers or derivatives, or acetophenone, with ultraviolet light. It is then necessary that the initiator molecules absorb in the spectral region supplied. In this way radicals can be generated at a finite rate at considerably lower temperatures than are necessary if purely thermal excitation is used. Finally, bimolecular reactions may produce radicals capable of initiating polymerization. Particularly important are the redox reactions, which occur in aqueous media, and involve electron transfer processes. For example, the systems Fe(II) plus hydrogen peroxide, or Ag(I), plus $S_2O_8^{--}$ are particularly important in initiating the radical polymerization of monomers. Because of the low temperature of initiation, the redox initiators or photochemically induced initiators are particularly preferred in the present invention. The amount of initiator is that sufficient to initiate the polymerization reaction. Polymerization is carried out until substantially all of the monomers or comonomers have been incorporated into the polymeric chains. This can be readily ascertained by simple analytical tests on the reaction mixture. Preferably, this polymerization is accomplished almost simultaneously with or immediatley prior to the covalent coupling of the polymer to the polysaccharide. Preferably, the coupling and polymerization are performed in the same aqueous phase.

In one embodiment, the condensation of the comonomer (a) with the hydroxy group or groups of polysaccharide, whether carried out before polymerization or thereafter, is normally carried out by adjusting the temperature of the reaction mixture, or by adding an appropriate acid/base catalyst.

The most preferred method of carrying out the process is in a "one-pot" system, using a hydroxy reactive comonomer (a). All desired comonomers and polysaccharides are added to an inert solvent system, such as, e.g., water, alcohols and organics. The polysaccharide and comonomers are treated under conditions which will initiate polymerization of the comonomers. This can be accomplished, for example, by adding to a well stirred mixture a water solution of an initiator such as ammonium persulfate and sodium thiosulfate, and initiating polymerization from about 15°C to 40°C. Alternatively, a photolabile initiator can be added and initiation caused by photochemical means. After stirring for a time sufficient to allow the polymerization to proceed to completion, the linking of the formed copolymer to the hydroxy groups of polysaccharide is caused by increasing the temperature of the reaction mixture to a temperature sufficient to cause this condensation. In the case when the linking group on the copolymer is a glycidyl group, such temperature is normally around 80—100°C. Reaction is then allowed to proceed at the second temperature for a time sufficient to either go to completion, or to achieve modification of the polysaccharide to the desired capacity. The product is filtered, washed and dried for further treatment, if necessary. Unreacted monomer is preferably washed away with alcohol, unreacted catalyst with aqueous media and polymer with methanol or ethanol.

Further reaction of the modified polysaccharide may be by crosslinking, activation of the ion exchange potential, as for example by quaternization of nitrogen functions, saponification of esters, ionization of acids, sulfonation, phosphorylation or oxidation of epoxides, or other similar procedures. Quaternization,

saponification, oxidation and salt formation are reactions well known to those skilled in the art, and will not be described in greater detail. Needless to say, the reactions useful for potentiation of the ion exchange potential of the material should not destroy the polysaccharide/copolymer linkages. Generally, strong acid conditions should be avoided.

Quaternization of aminoalkyl functions can be carried out simultaneously with crosslinking by reacting the modified polysaccharide with diacyl halides or alkyl dihalides, at a ratio of 0.1 to 30 parts by weight of the halides per 100 parts of polysaccharide at appropriate temperature, time and solvent conditions.

Another further reaction of the modified polysaccharide materials would be to anchor the affinity ligands or biologically active molecules to the anchoring groups of comonomer (b). This reaction can be readily accomplished by mixing in an appropriate solvent, normally aqueous, the affinity ligand or biomolecule to be anchored and the modified polysaccharide, and carrying out anchoring for a time and under conditions sufficient to cause covalent coupling therebetween. It may be necessary to activate polysaccharide groups on comonomer (b) with such materials as cyanogen halides, and to then further treat the activated polysaccharides with the affinity ligands or biomolecules. In this embodiment, it is preferred to first couple the affinity ligand or biologically active molecule to comonomer units (b), and then bind the resulting polymer or copolymer to the polysaccharide.

The reactions between the affinity ligand or biologically active molecule and the anchoring groups on comonomer (b) are normally carried out at temperatures of from 0°C to 50°C, and may involve the addition of catalysts such as acid or base, or metals, or such other materials as DCC. The resulting ligand- or biomolecule-containing modified polysaccharide is washed under appropriate conditions and is ready for further treatment, if necessary.

Hydrophobic comonomers (b) are normally added to a copolymerization mixture in the presence of alcoholic solvents and/or surfactants. Washing is then carried out with alcohols.

As an illustrative example of the formation of a product under this invention can be described a composite of 1) cellulose and 2) a copolymer of a) glycidyl methacrylate (GMA) and b) diethylaminoethyl methacrylate (DEAEMA). This will be used only to show the many variables which are involved in the preparation, and which can be controlled to achieve a virtually unlimited number of products and resulting properties.

Step 1. Fiber dispersion and addition of monomers

Cotton linter is dispersed in water at 1% solids content—DEAEMA and GMA are added.

Variables

A) Chemical nature and physical size of cotton;
B) Purity of monomer;
C) Percent solid content;
D) Monomer/cotton ratio;
E) DEAEMA/GMA ratio;

Step 2. Polymer formation

Temperature of slurry is raised to 15°C to 40°C, followed by addition of catalyst and reaction for 1—2 minutes.

Variables

A) Temperature and reaction time;
B) Amount of catalyst

Step 3. Coupling of polymers to cotton

Temperature of slurry is raised to 80°C to 100°C within 25 minutes. Surfactant is added.

Variables

A) Rate of temperature rise;
B) pH of slurry;
C) Surfactant effect

Step 4. Wash (1)

Four volumes of water are used to wash the product in order to remove the inorganic catalyst left in the system.

Variables

A) Volume of water required to bring out the salt;
B) Mode of washing

Step 5. Wash (2)

Two volumes of methanol are used to wash the product in order to remove the homopolymer and unreacted monomer.

Variable

A) Amounts of methanol, depending on reaction conditions

Step 6. Wash (3)

Four volumes of water are used to wash the product in order to remove the methanol entrapped in the fibers.

Variable

A) Amount of water

Step 7. Acidification

The product from Step 6 is redispersed in water and 1M HCl is added gradually to pH 4.0—4.5.

Variable

A) Amount of water

Step 8—14: Quaternization

Step 8. Redispersal

The product from Step 6 is redispersed in water to a 1% solids content.

Variable

A) Solids content

Step 9. Quaternization

1,6 dichlorohexane is added to the slurry in the presence of KI as catalyst. The temperature is raised to 95°C and refluxed for 15 hours.

Variables

A) Quaternization agent;

B) Solvent;

C) Reaction time and temperature

Step 10. Wash (5)

Water is used to remove the KI salt and the quaternization agent.

Step 11. Wash (6)

Methanol is used to remove excess quaternizing agent by increasing its solubility.

Variable

A) Degree of washing

Step 12. Wash (7)

A water wash is used to remove methanol from the system.

Step 13. Acidification

1M HCl is used to protonate remaining unquaternized DEAE.

Variable

A) Balanced DEAE and QAE depends on the degree of quaternization carried out in the system

Step 14. Wash (8)

Excess acid is washed away.

The preferred formation of self-supporting fibrous media from the modified polysaccharide materials of the invention can be carried out immediately after polymerization and polysaccharide modification. In this mode, unmasking the ion exchange groups or anchoring of affinity ligands or biomolecules may be carried out on the formed sheets themselves. Alternatively, the fibrous media is formed after unmasking of the ion exchange groups and/or anchoring of affinity ligands or biomolecules. The preferred method is to form the fibrous sheets after polysaccharide modification, and carry out further reactions, such as unmasking and anchoring on the sheets.

A self-supporting fibrous matrix using the modified polysaccharide of the invention can preferably be made by vacuum filtering an aqueous slurry of fibers and, if desired, additional resins and modified or unmodified particulate. This forms a sheet having uniformly high porosity, fine pore-size structure with excellent flow characteristics and is substantially homogeneous with respect to fiber, resins and particulate.

The vacuum filtration is performed on a foraminous surface, normally a woven wire mesh which, in practice, may vary from 50 mesh to 200 mesh, with mesh openings ranging from 280 μm to 70 μm respectively. Finer meshes are unsuitable because of clogging problems and/or structural inadequacy.

The sequence of adding the overall components to the slurry (modified fibers, other fibers, particulates, modified particulates, other resins, etc.) is relatively unimportant, provided that the slurry is subjected to controlled hydrodynamic shear forces during the mixing process. The slurry is normally prepared at about 4% consistency and then diluted with additional water with a proper consistency required for vacuum filtering and sheet formation. This latter consistency will vary depending upon the

type of equipment used to form the sheet. Typically, the slurry is cast onto a foraminous surface, vacuum filtered and dried in the conventional manner.

The flat, dimensionally stable sheet can be of any desired thickness and is then cut to the appropriate dimensions for each type of application. Preferably, the wet sheet is often dried and then cut to proper size in order to form discs. These discs can be loaded onto an appropriately sized cylindrical column to form the desired medium. The disc and cylinder should preferably be in interference fit so that the disc can be pushed into the cylinder without distortion, but not fall under gravitational force allowing gaps between the discs and the cylinder. After the column is packed dry, a pump can be used to pump solvent through the elements stacked in the column. Preferably, the elements swell to form a substantially tight edge seal to the cylinder wall. Because the individual elements are dimensionally stable, the column is not sensitive to orientation or handling, a problem which is common with other chromatographic media, particularly of any gel type media.

In a preferred embodiment, the modified polysaccharide media of the invention in fibrous form is shaped into a jelly-roll configuration, as disclosed in U.S. Patent Application Serial Number 505,532 or in a configuration similar to that described for mechanical filtration in US—A—2,539,767 and 2,539,768 and available from AMF, Incorporated, Cuno Division, as Micro-Klean® Filter Cartridges, and described in a brochure of the same title, 1981.

The jelly roll configuration is normally shaped into a cartridge. Utilization of the cartridge has several advantages. Production scale flow rates of 200—500 ml/min can be utilized with the cartridge, depending on the application. The cartridges can be autoclaved separately by rolling/encasing in Kraft non-shedding paper. They can be housed in special housings made of polysulphone tubing with acetyl end caps, where the cartridge can be autoclaved. The cartridges show long term stability with respect to their binding capacities at room temperature storage.

The rigidity of the matrix allows the column to be operable in unrestricted diameter for high volume processes. The column volume is virtually unaffected by changing pH or ionic strength in the buffer solution. Such a system can be equilibrated and regenerated in a short period of time, eliminating cumbersome procedures of column preparation and regeneration.

The ion exchange, affinity, reverse phase, or bioactive materials of the invention can be used in any of the well known prior art processes of ion exchange, affinity or reverse-phase chromatography, or as supports for bio-reactors.

The materials obtained in the present invention have unique properties over materials used heretofore. A binary system formed by mixing modified polysaccharide, e.g., cellulose, with other types of polysaccharide, such as microcrystalline cellulose, and forming a fibrous sheet (without the addition of extra particulate material) has the advantage of lacking silica materials, which normally shows nonspecific adsorption of proteins. A highly controllable degree of swelling which can be readily controlled by adjusting the multiple variables present in the system, allows the replacement of unmodified microcrystalline cellulose by other mechanical strengtheners, has low production cost, and high exchange capacity or anchoring capacity, which can, in any event, be modified by controlling the ratio of comonomers (a) and (b).

A ternary system formed from modified polysaccharide, modified or unmodified particulate and unmodified fibers has the advantage of potential maximization of swelling, rigidity and capacity obtainable through varying the multiple variables present in the system. Flow rates can be controlled by varying the ratio of organic to particulate (especially silica) components without significant loss of capacity. In addition, such a system shows advantages over prior art systems using nonmodified celluloses in that, in many instances, no refined pulp is necessary, since the polymer linked on the polysaccharide will function as well as refined pulp in bridging particles to the fiber surfaces. The polymeric components in the present system may also function as binder resins; therefore, addition of resins to the slurry can, if desired, be eliminated.

While ordinarily the prior art has relied on materials with high surface area to bind the maximum number of chemical groups thereon, the materials of the present invention provide means of binding multifunctional groups per each polysaccharide molecule. As long as these functional groups are made accessible for ion exchange or anchoring, the preparation is no longer limited to high surface area materials.

In protein separations and purifications, the key factor which ought to be avoided is possible damage to the protein molecules. In the present invention, this is avoided by using biocompatible materials such as polysaccharides with only limited amounts of organic polymers. The materials are swellable and provide for very little denaturation of protein. Nonspecific adsorption of biopolymers is decreased, since both acrylic and saccharide polymers show very low amounts thereof, and are hydrophilic in nature.

Another area of design flexibility and design control is in the possible adjustment of the length of the acrylic polymer carrying the various ion exchange or anchoring groups. The variability of the polymer length not only may eliminate steric hindrance due to solute or ligand accessibility, but also minimizes leakage of the ligand from the matrix. The polymer "arm" should not be too long to avoid potential internal hydrophilic interaction, such as folding back. An "arm" of about 5 to 20 atoms is generally ideal for attaching the bioligands.

By the use of well known anchoring groups for affinity ligands or biomolecules, the materials can

incorporate all of the synthetic methods developed in prior art commercial materials, such as Sephadex® or Sepharose®.

Finally, the matrix is chemically and physically stable with minimum change of dimensional stability upon contact with salt and eluents.

Having now generally described this invention, the same will be better understood by reference to certain specific examples.

Example 1

Poly(diethylaminoethyl methacrylate)-g-Cellulose

(a) Recipe

| Reagent | Quantity |
|---|---|
| Microcrystalline cellulose | 10 g |
| Diethylaminoethyl methacrylate | 25 ml |
| Glycidyl methacrylate | 2.5 ml |
| Ammonium persulfate | 1 g |
| Sodium thiosulfate | 1 g |
| Water | 500 ml |

(b) Procedure

1. Cellulose was well dispersed in water in a reactor.
2. Diethylaminoethyl methacrylate and glycidyl methacrylate were well mixed before pouring into the reactor.
3. After pouring the monomers into the reactor, the mixture was stirred for 5 minutes.
4. Ammonium persulfate and sodium thiosulfate were dissolved in 20 ml water; and then poured into the reactor.
5. The reactants were stirred for 20 minutes at 15°C to 40°C; the temperature was then increased to 80°C.
6. Stirring was maintained for 1 hour in the range of 80—90°C.
7. A period of 0.5 hour was allowed to cool down the products.
8. The product was filtered and washed well with water and acetone.

(c) Results

The number of available DEAE functional groups was determined by titrating with 0.1 M $HClO_4$ in glacial acetic acid (0.1M HCl in aqueous solution) on a Brinkman Potentiograph E 536. The instrument was calibrated by measuring commercial DEAE cellulose as the control, and capacity was expressed as milliequivalent (mEQ) per gram of dry material. The copolymerized cellulose showed approximately three times more capacity than that of the cellulose made from the conventional prior art derivative method.

The results were further confirmed by the measurement of albumin adsorption capacity. This was done by preparing a fibrous sheet, cutting into discs and packing in a 76 mm size column. Albumin in phosphate buffer solution was pumped through the column and later eluted with 1N NaCl solution. The amount of albumin measured at 280 nm O.D. showed the following results (Table 1):

TABLE 1
Beaker test on DEAE media

| Sample No. | Sample weight (dry/wet) | pH: Media in buffer | pH: 0.1M NaOH added | pH: Media in BSA | BSA conc. | Capacity test: A280 t=1 hr | Capacity test: (Mg/g) |
|---|---|---|---|---|---|---|---|
| 1 | 1/9.9 | 5.63 | 2.7 ml | 6.25 | 1030 mg | 0.25 | 991 |
| 2 | 1/8.7 | 5.5 | 3.2 | 6.25 | 1030 | 0.33 | 978 |
| 3 | 1/8.33 | 5.68 | 2.8 | 6.25 | 1025 | 0.38 | 966 |
| 4 | 1/7.69 | 5.68 | 2.8 | 6.25 | 1025 | 0.69 | 918 |
| 5 | 1/7.69 | 5.68 | 2.8 | 6.25 | 1895 | 4.5 | 1195 |
| 6 | 1/8.7 | 5.57 | 3.9 | 6.30 | 1025 | 0.19 | 995 |
| 7 | 0.88/8.0 | 5.5 | 3.6 | 6.30 | 1533 | 1.49 | 1298 |
| 8 | 1.0/8.33 | 5.52 | 3.3 | 6.25 | 1030 | 0.36 | 974 |
| 9 | 1.0/8.33 | 5.52 | 3.3 | 6.25 | 1236 | 0.97 | 1085 |

Example 2
Quaternized poly(diethylaminoethyl methacrylate)-g-cellulose
(a) Recipe

| Reagent | Quantity |
|---|---|
| Poly(diethylaminoethyl methacrylate)-g-cellulose (Example 1) | 5 g |
| 1,6-Dichlorohexane or 1,4 dichlorobutane | 3 ml |
| Potassium iodide | 0.1 g |
| Isopropanol | 100 ml |
| Water | 100 ml |

(b) Procedure

1. A round neck flask was filled with wet poly(diethylaminoethyl methacrylate)-g-cellulose, 1,4 dichlorobutane, potassium iodide and isopropanol.
2. The reaction mixture was refluxed overnight.
3. The product was filtered and washed well with acetone and water.
4. The sample was acidified with $10^{-2}$ N HCl, then washed well with water.

(c) Results

The results demonstrate the effectiveness of 1,6-dichlorohexane as cross-linker on fixing the charged groups. 1,6-dibromo or diiodo hexane have also been applied as cross-linkers with success.

To improve quaternization percentage, water soluble quaternization reagents, halo compounds, such as 1,3-dichloro-2-propanol, 1-chloro-2-propanol, chloroacetic acid, methyl chloroacetate and chloroethyl diethylamine can be applied with success. The quaternized (QAE) media derived from ethyl iodide showed exceptionally high BSA binding capacity in the pH range from 7 to 8.5. The results are shown in Tables 2 and 3.

TABLE 2
Quaternization percentage in QAE media derived from different Q-reagents

| Sample No. | Q-reagent | Q(%) |
|---|---|---|
| QAE-1 | 1-chloro-2-propanol | 13 |
| QAE-2 | 1,2-dichloro-2-propanol | 77 |
| QAE-3 | methyl chloroacetate | 83 |
| QAE-4 | chloroethyldiethylamine | 82 |
| QAE-5 | ethyl iodide | 80 |

TABLE 3
BSA capacity of various QAE media vs. pH of phosphate buffer solution

| Sample No. | Q-reagent | BSA cap. (mg/g) | pH | BSA cap. (mg/g) | pH | BSA cap. (mg/g) | pH |
|---|---|---|---|---|---|---|---|
| QAE-1 | methyl chloroacetate | 1527 | 6.29 | 1027 | 7.36 | 758 | 8.69 |
| QAE-2 | 1-chloro-2-propanol | 1376 | 6.30 | 671 | 7.30 | 336 | 8.12 |
| QAE-3 | 1,2-dichloro-2-propanol | 1466 | 6.25 | 676 | 7.29 | 387 | 8.18 |
| QAE-4 | ethyl iodide | 1391 | 6.27 | 1015 | 7.59 | 816 | 8.26 |
| QAE-5 | 1-chloro-2,3-propanediol | 1397 | 6.28 | 692 | 7.33 | 367 | 7.98 |
| QAE-6 | chloroethyl diethylamine | 1483 | 6.27 | 559 | 7.39 | 290 | 8.60 |
| DEAE | — | 1625 | 6.38 | 738 | 7.32 | 296 | 7.98 |

Example 3

A beaker test on the capacity of media prepared according to Sample 7 of Table 1 supra was carried out on various different types of protein molecules. The results are shown in Table 4 below:

TABLE 4
Beaker test on media

| | | pH | | | | Capacity test | |
|---|---|---|---|---|---|---|---|
| Sample No. | Sample nature (dry/wet) | Media in buffer | 0.1M NaOH added | Media in protein | Protein conc. | A280 t1=hr | (Mg/g) |
| 1 | Ovalbumin PI=4.6 Crude dried egg white m.w.=43,000 50 mg/ml | 5.74 | 5.0 ml | 6.3 | 2038 | 4.37 | 1343 |
| 2 | BSA PI=4.9 (50 mg/ml m.w.=65,000) | 5.63 | 4.0 | 6.3 | 1811 | 3.07 | 1327 |
| 3 | Soybean PI=4.15 Trypsin m.w.=20,100 Inhibitor (10 mg/ml) | 5.52 | 5.0 | 6.3 | 443 | 1.55 | 200 |
| 4 | Amyloglucosidase PI=3.5 (20 mg/ml) | 5.60 | 4.1 | 6.3 | 954 | 4.25 | 282 |
| 5 | Pepsin PI=2.2 (50 mg/ml) m.w.=34,500 | 5.63 | 3.9 | 6.3 | 1744 | 2.52 | 1073 |

Example 4

Plasma fractionation using the media of Example 2

775 ml of Cohn fractions II and III from human plasma were dissolved in 0.01M phosphate buffer at pH 6.5. This solution was added to a column (7.7 cm i.d.×4.3 cm length, vol=200 ml) containing 25 g of the media of Example 2. 2.7 g of IgG were recovered from the non-bound fractions whereas elution of bound material with 1M sodium chloride yielded 7.5 g of albumin.

Example 5

Formulation of a sheet containing both modified cellulose and modified silica

(a) Silanization of silica

The silanization process can be performed either in toluene or in water. The reaction mechanism involves condensation of the halide or silanol functional groups on the organo-silane with silanols on the silica-surface. Therefore, the reaction conditions depend very much on the nature of the silane and the

surface property of silica. The selection of silica is made based on both chemical and physical factors. Chemically, it should have a surface property favorable for silanization reactions; physically, the particle size should be large enough to permit the least amount of pressure build-up in a column up to 61.0 cm (2 ft.) length as long as the composite structure homogeneity can be maintained in the formulation. The following three grades of silica gel from Davidson Chemicals are the choice to meet such requirements:

| Grade | Approx. particle size (μm) | Surface area ($m^2/g$) | Pore vol. (ml/g) | Pore dia. A | pH 5% slurry |
|---|---|---|---|---|---|
| 922 | 50 | 750 | 0.43 | 22 | 4.0 |
| 950 | 30 | 600 | 0.43 | 25 | 6.0 |
| 952 | 70 | 320 | 1.50 | 250 | 7.0 |

The maximum pore diameter from Davidson's product is around 250 Å, which can only accommodate protein molecules smaller than albumin. Controlled pore glass of 1000 Å or controlled pore silica of 500 Å needs to be used to facilitate the diffusion of larger protein molecules such as IgG or immune complex. DEAE or SP are introduced onto silica gel through the following route:

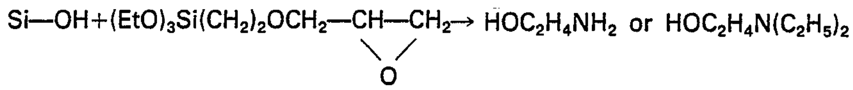


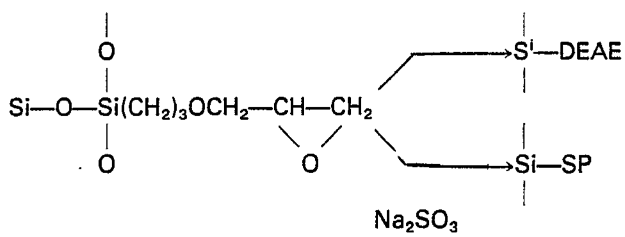


(b) Formulation of the slurry

The modified cellulosic fiber from Example 2 and the silanized silica from (a) were mixed in a tank at 1 to 2% consistency to form a slurry according to the following formulations (Table 5):

TABLE 5

| Sample No. | Modified (long cellulosic) fiber (%) | Refined pulp (+40 CSF) % | DEAE on silica 952 % | % Retention |
|---|---|---|---|---|
| 1 | 20 | 10 | 70 | 90 |
| 2 | 30 | 0 | 70 | 80 |
| 3 | 30 | 20 | 50 | 95 |
| 4 | 50 | 0 | 50 | 90 |
| 5 | 20 | 7%(+40) & 7%(−10) | 60 | 100 |

Alternatively, copolymerization can be performed on the mixture of large and small refined pulp in the same reactor. Silica 952, being large in size (70 μm or larger), can be held by the modified cellulose alone without refined pulp. No binder is required, since the polymer on cellulose is also functional as a binder.

(c) Formation of a column

The slurry was cast onto a foraminous surface, vacuum felted, and dried in a conventional manner. The flat, dimensionally stable sheet was then cut to the appropriate dimensions for each type of column. The cut discs were stacked in the cylinder in an appropriate height.

(d) Discussion and results

The above prepared matrix was cut to 9.0 mm diameter sized discs and stacked to 15,2 cm length with 0.85 g of dry weight material. After following the swelling, adsorption and elution procedures, the albumin adsorption capacity was measured and the number of DEAE groups was titrated, with the results shown in the following Table 6:

TABLE 6

| | Matrix characterization | | | Capacity | |
|---|---|---|---|---|---|
| Exp. No. | Modified | +40 refined pulp | Silica 952 | By titration (mEQ/G) | Albumin adsorption (mg/g) |
| 1 | 20% (Inact.) | 10% (Inact.) | 70% (Act.) | 0.89 | 171<br>182 |
| 2 | Act. | — | Act. | 2.0 | 245<br>249 |
| 3 | Act. | — | Inact. | 1.0 | 120<br>123 |
| 4 | Inact. | Inact. | Inact. | 0 | 0 |
| 5 | 100% Act. | — | — | 2.0 | 264<br>270 |

The results fully demonstrate the contribution of the ion exchange functional groups from the organic matrix. The enhanced capacity is achieved by making cellulose and binders all contributing their available sites for ion exchange, in addition to silica.

Example 6

Formation of an anionically modified cellulose according to the invention

1. Cellulose activation

Cellulose was reacted with potassium periodate in 2—5% water dispersion, with the periodate being at 2% w/v at pH 3.0 for about 2 hours at room temperature (or 30 min at 40°C) while stirring constantly. The oxidized cellulose was vacuum felted on a screen and washed with deionized water until removal of the unreacted oxidants was complete. The conductivity of the washing water was measured until no more salt came off from cellulose.

2. Monomer coupling to the activated cellulose

The activated cellulose was redispersed in deionized water at 2% consistency, and amino ethyl methacrylate (AEM) was added. The weight ratio of AEM to cellulose was approximately 25%. The temperature was raised to 50°C and AEM was allowed to react with the activated cellulose for 1 hour under agitation.

3. Formation of copolymers

Glycidyl methacrylate (GMA) was then added at a weight ratio of 9 to 1 of AEM, while maintaining the reactor at 50°C. Nitrogen gas was bubbled into the reaction tank to remove oxygen gas dissolved in the aqueous system. Catalyst, such as ammonium persulfate and sodium thiosulfate mixture or organic peroxide, was added to initiate the polymerization reaction via the vinyl groups for 10 minutes. The reaction kinetics could be followed by measuring the solution turbidity or the decrease of glycidyl groups in the liquid.

4. Conversion of the glycidyl groups to the corresponding anionic groups

The conversion of epoxy groups to carboxyl groups was performed by using potassium permanganate as oxidant at 60°C for 4 hours. The final product was thoroughly washed with deionized water and methanol for removing unreacted species and homopolymers.

5. Fabrication of chromatographic columns

The materials thus prepared were formulated by vacuum felting to form composite filter pads as shown in Table 7.

TABLE 7
Formulation of anionically modified pads

| Filter No. | Natural cellulosic fiber | Polymer grafted on fiber | | Polymer grafted on M.C.[2] powder cellulose | | Binder resin |
|---|---|---|---|---|---|---|
| | | Type | Wt. of polymer/ Wt. of fiber | Type | Wt. of polymer/ Wt. of M.C. | |
| | Soft cotton linter[1] | Cotton Linter with GMA | | M.C. of 90 micron size[3] | | Ethylene glycol diglycidyl ether |
| Cat #1 | 15% | 40% | 2.0 | 40% | 1.0 | 5% |
| Cat #2 | 20% | 40% | 1.5 | 35% | 0.5 | 5% |
| Cat #3 | 10% | 50% | 1.0 | 35% | 0.5 | 5% |

(1) Southern Cellulose Co.
(2) M.C.=microcrystalline.
(3) From FMC, Grade pH 102.

The balance of pad capacity and flow rate can be adjusted, based upon the following reaction variables.

(a) Size of cotton fibers and microcrystalline cellulose powder,

(b) The amount of polymers grafted onto cellulose,

(c) The structure and nature of the polymers,

(d) The nature and the amount of the oven-dried sheets can be cut into proper sizes and can be stacked into columns for chromatographic separation of protein molecules.

Capacity test results

The capacity of a column with this material was measured from the amount of bovine gamma globulin (BGG) adsorbed on the column under specific conditions, and was expressed as milligrams of BGG adsorbed per gram of column material. The procedure of the test was as follows:

(a) A peristaltic pump was connected to the column with a pressure gauge installed in the line and a UV monitoring unit, to follow the protein concentration at 280 NM.

(b) Column packing

A column packed with 25 mm dia disks and 15,2 cm (6-inch) in height will generally have pressure across the column in the range of 6,9 to 68,9 kPa (1 to 10 psi), depending on the flow rate and pad porosity. The pads should be packed snugly so there is very little gap between them but not jammed with great force to fragment their structure. The total amount of pads installed in the column was weighed so the total capacity could be expressed either on the column volume or on a weight basis.

(c) Column equilibration

The equilibration buffer was pumped through the column until the effluent had the same pH and conductivity as the starting solution. About 5 volumes of buffer were needed to reach the equilibrium conditions.

(e) Adsorption of BGG by the cationic exchange column

Based on an average BGG adsorption capacity around 200 mg/g of pad, a volume of BGG solution was poured into a graduated cylinder so that there were about two volumes of the amount of BGG required to saturate the column. The solution was recycled through the column at 5 ml/min of flow. The concentration of BGG was monitored by the UV monitor at 280 NM. When the column reached the saturation point, the A280 leveled off. The column was washed with equilibration buffer until A280 returned to baseline. With the extinction coefficient of BGG being =1.3, the capacity was expressed as follows:

$$\frac{\text{capacity of BGG adsorbed}}{\text{gram of pad}} = \frac{A^{280}\times\text{total volume}}{1.3} \text{ divided by total weight of the pad}$$

The pH effect on the capacity of the cationic exchange filter No. Cat. #1 and Cat. #2 are shown in Table 8.

TABLE 8

| Pad weight | Column size | pH | Adsorption condition flow rate | WP kPa | (psi) | Capacity on BSA mg/g |
|---|---|---|---|---|---|---|
| 3.29 g | 25 mm×7 pads | 5.5 | 2 ml/min | 55,2 | (8) | 837 |
| 3.29 g | 25 mm×7 pads | 6.0 | 2 ml/min | 55,2 | (8) | 960 |
| 2.21 g | 25 mm×4 pads | 6.5 | 2 ml/min | 0 | (0) | 665 |
| 2.03 g | 25 mm×4 pads | 7.0 | 2 ml/min | 6,9 | (1) | 530 |
| 2.11 g | 25 mm×4 pads | 7.5 | 2 ml/min | 0 | (0) | 215 |

Conclusions for Example 6

A cationic exchanger with high capacity has been developed, as tested by adsorption of Bovine gamma globulin. High flow rate applicable for large scale industrial operations can be attained.

The system is basically a composite structure with cellulose fiber as supporting backbone and an acrylic polymer carrying glycidyl groups covalently linked to the backbone. These groups are converted to corresponding anionic functional groups through various types of oxidation.

As long as the lignin content is kept low, the reaction between cellulose and the polymer will proceed according to the conditions covered in this Example.

Examples 7—11

These Examples show the use of the carrier of the invention in a fibrous matrix shaped into a jelly-roll form and in cartridge configuration.

Example 7

Separation of protein mixtures by DEAE cartridges

In this Example, it is demonstrated that DEAE "jelly-roll" cartridges, like columns can be utilized to separate protein mixtures with a high degree of resolution. Unlike columns, the cartridges have no undesirable pressure problems and can therefore be operated at a high flow rate with a low pressure drop. In fact, out of 15 cartridges tested, all units gave reproducible and comparable results.

Experiment A shows the separation of an artificial mixture of bovine -globulin and bovine albumin. Experiment B shows the fractionation of human plasma. Cartridges (diameter 2.5 cm, height 7.5 cm) were used in both of these experiments.

Experiment A

Protein: A mixture of two subclasses of -globulin (483 mg) and bovine serum albumin (432 mg)

Buffers Buffer A: Phosphate buffer (0.01 M) at pH=6.8
Buffer B: Phosphate buffer (0.05 M) at pH=6.0
Buffer C: Phosphate buffer (0.05 M) at pH=6.2+1 M NaCl

282 mg -globulin Type I (100% pure) was eluted with 1 M NaCl in Buffer A (Peak A in Figure 3).
148 mg -globulin Type II (approximately 90% purity) was eluted in Buffer B (Peak B in Figure 3).
Albumin (95%) purity) was eluted in Buffer C (Peak C in Figure 3).

Experiment B

Protein: 10 mL plasma, pH=6.8 (adjusted pH)
Gradient elution: .01 M phosphate buffer (pH=6.8 to 4.5)
Peak I: -globulin
Peak II: Transferrin
Peak III: Albumin
Electrophoretic studies indicate that the fractions are at least 90% pure.

Yield and recovery

Protein applied:

| | |
|---|---|
| 10 mL plasma total $O.D._{280}$ | =390 |
| -globulin $O.D._{280}$ | = 59.4 |
| Transferrin, " | = 44.0 |
| Albumin, " | =163.0 |
| Other eluted proteins | = 84.06 |
| | 350.46 |

Yield=88%

Example 8

Elution bound transferrin by pH shift using DEAE cartridge

DEAE ("jelly-roll") cartridge media reduces protein binding capacities at a more alkaline pH than 7.0. This unique pH shift has been utilized to elute bound proteins at higher pH without the use of salts and subsequent dialysis or ultrafiltration.

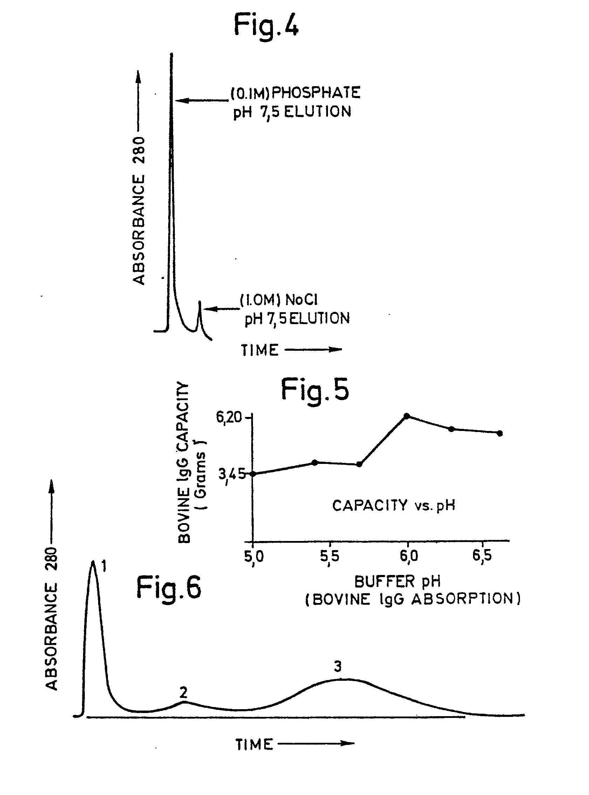

A previous study had shown that 85.4% bound BSA was eluted with (0.1 M) phosphate at pH 7.5. In the present example, a similar observation was found with transferrin. Transferrin was bound to a DEAE cartridge media with a (0.01 M) phosphate buffer at pH=6.8, and eluted with (0.01 M) phosphate, pH=7.5. 92% bound transferrin was eluted in one column volume. The remaining transferrin was eluted with (0.1 M) phosphate pH=7.5 and (1 M) NaCl. Figure 4 shows the results.

Example 9

Use of DEAE and CM cartridges for IgG fractionation

1. DEAE cartridge ("jelly-roll")
Applied Protein: Dialysed human plasma
Binding Conditions: Phosphate Buffer (0.01 M: 0.9—1.2 mS) pH=6.3
Elution Conditions (continuous or step is usable):

| | [Buffer] | Conductivity | pH |
|---|---|---|---|
| IgG | 0.01 M | 1.0 mS | 6.8 |
| Transferrin | 0.025 M | 1.75 mS | 6.04 |
| Albumin | 0.06 M | 3.85 mS | 5.14 |

2. CM cartridge ("jelly-roll")
Applied Protein: Unbound IgG from previous DEAE step
Binding Conditions: Phosphate Buffer (0.01 M: 0.9—1.2 mS) pH=6.0
Elution Conditions:

| | [Buffer] | pH | [Salt] |
|---|---|---|---|
| IgG | 0.05 M | 6.3 | 1 M |

Example 10
CM cartridge capacity at different pH values

Comparative studies were made with a CM Cartridge ("jelly-roll") and commercial Whatman® CM-52. Details are shown on Figure 5 and Tables 10 and 11.

TABLE 10
Invention cartridge

| Buffer pH | Elution condition | Cartridge bovine IgG capacity | Recovery (%) |
|---|---|---|---|
| Phosphate (0.01M) pH=6.6 | Phosphate (0.05M) pH=6.3 (1M) NaCl | 5.43 g | 94 |
| Phosphate (0.01M) pH=6.3 | Phosphate (0.05M) pH=6.3 (1M) NaCl | 5.96 g | 96 |
| Phosphate (0.01M) pH=6.0 | Phosphate (0.05M) pH=6.3 (1M) NaCl | 6.2 g | 100 |
| Phosphate (0.01M) pH=5.7 | Phosphate (0.05M) pH=6.3 (1M) NaCl | 3.8 g | 99 |
| Acetate (0.02M) pH=5.4 | Acetate (0.2M) pH=4.0 (1M) NaCl | 3.9 g | 100 |
| Acetate (0.02M) pH=5.0 | Acetate (0.2M) pH=4.0 (1M) NaCl | 3.45 g | 98 |

TABLE 11
Whatman CM-52[R]

| Buffer pH | Nature of matrix | Column dimension | Adsorption condition | Elution condition | Bovine IgG capacity (mg/g) | Recovery (%) |
|---|---|---|---|---|---|---|
| Phosphate (0.01 M) pH=6.5 | Microgranules preswollen | (a) 21 mL (b) 16 mm (dia.) | 2 mL/min. | Phosphate (0.05 M) (1 M) NaCl | 1.71 g | 42 |
| Phosphate (0.01 M) pH=6.0 | Microgranules preswollen | (a) 21.5 mL (b) 16 mm (dia.) | 2 mL/min. | Phosphate (0.05 M) (1 M) NaCl | 4.48 g | 89 |
| Phosphate (0.01 M) pH=5.5 | Microgranules preswollen | (a) 22 mL (b) 16 mm (dia.) | 2 mL/min. | Phosphate (0.05 M) (1 M) NaCl | 7.8 g | 87.6 |

Example 11

Plasma fractionation using quaternized media cartridges

Cartridge dimensions: 2.5 cm (dia.)×7.5 cm (height)

Protein: 10 mL plasma, pH=6.8

Gradient: Continuous phosphate buffer (0.01 M), pH=7.3 to (0.2 M), pH=4.5

Material

Input: 10 mL plasma, total $O.D._{280}$=400

Output: Total $O.D._{280}$=377

Yield: 94.25%

Results are shown in Figure 6.

Example 12

Invention media containing hydrophobic groups

(a) Recipe

Poly(n-octylacrylate)-g-cellulose

| Reagent | Quantity |
|---|---|
| Refined pulp (+260) | 20 g |
| n-octyl acrylate | 50 ml |
| Glycidyl methacrylate | 5 ml |
| Ammonium persulfate | 2 g |
| Sodium thiosulfate | 2 g |
| Water | 933 cc |

(b) Procedure

1. Refined pulp (+260) was well dispersed in water in a 3 neck, 3 liter round flask.
2. n-Octyl acrylate and glycidyl methacrylate were well mixed before pouring into the reactor.
3. After pouring monomers into the reactor and mixing the reaction mixture well, ammonium persulfate and sodium thiosulfate solutions were charged into the reactor at room temperature.
4. The reaction mixture was strongly agitated and the reaction temperature was raised to 82°C within 15 minutes.
5. Stirring was maintained for 1 hour in the temperature range of 80—85°C.
6. After cooling down the reaction mixture, the product was washed well with water.

Example 13

Invention media containing chelating groups

Poly(3-N,N-dicarboxymethyl-z-hydroxy-propyl methacrylate)-g-cellulose

(a) Recipe

| Reagent | Quantity |
|---|---|
| Refined pulp (+260) | 50 g |
| Glycidyl methacrylate | 12.5 cc |
| Ammonium persulfate | 0.5 g |
| Sodium thiosulfate | 0.5 g |
| Sodium iminodiacetate | 2 g |
| Water | 250 cc |

(b) Procedure

1. Refined pulp (+260) was well dispersed in 800 ml water in a 3 neck reactor.
2. After pouring glycidyl methacrylate into the reactor and mixing the reaction mixture well, ammonium persulfate and sodium thiosulfate were charged into the reactor at room temperature.
3. The reaction mixture was strongly agitated, and the reaction temperature was raised to 80°C within 15 minutes.
4. Stirring was maintained for 1 hour in the temperature range of 80—85°C.
5. The reaction mixture was cooled to 60°C, and then sodium iminodiacetate was charged into the reactor. Further reaction was continued for 26 hours.
6. The reaction mixture was cooled, and product was filtered and washed.

Example 14

Effect of polymer composition on protein adsorption capacity

| Exp. No. | Polymer composition % GMA as coupler | % DEAEMA as functional groups | Method of polymer formation | BSA adsorption capacity mg/g media |
|---|---|---|---|---|
| 1 | 16% | 84% | *10% Surfactant | 650 |
| 2 | 14 | 86 | „ | 854 |
| 3 | 12 | 88 | „ | 1,106 |
| 4 | 10 | 90 | „ | 1,446 |
| 5 | 8 | 92 | „ | 1,548 |
| 6 | 6 | 94 | „ | 1,620 |
| 7 | 4 | 96 | „ | 972 |
| 8 | 2 | 98 | „ | 280 |
| 9 | 83 | 91.7% | Without Surfactant | 980 |
| 10 | 10 | 90 | „ | 1,450 |
| 11 | 12.5 | 87.5 | „ | 1,650 |

*10% surfactant (Lauryl Alcohol Ethoxylate) on the basis of cellulose weight forms latex type polymer.

The results indicate that either increasing or decreasing the GMA composition too much beyond the range of 4 to 12% by weight decreases the adsorption capacity. Values of GMA higher than about 12% cause a decrease in porosity, whereas values lower than about 4% cause losses in grafting efficiency.

## Claims

1. A modified polysaccharide material which comprises:

(1) a water-insoluble polysaccharide covalently bonded to a synthetic polymer;

(2) said synthetic polymer comprising a copolymer made from a free-radical polymerization of

(a) a polymerizable compound containing an epoxy group capable of direct covalent coupling to a hydroxy group of said polysaccharide, and a vinyl group capable of free-radical polymerization; and

(b) a polymerizable compound having the formula:

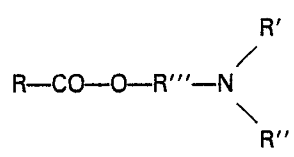

wherein R is an alpha, beta-ethylenically unsaturated polymerizable radical,

R' and R'' are the same or different $C_1$—$C_6$ alkyl or alkanoyl groups, and

R''' is a direct bond or a $C_2$—$C_3$ alkyl group, and wherein R' and R'' taken together with the N-atom may form a heterocyclic ring.

2. The material of claim 1 wherein said polysaccharide is cellulose.

3. The material of claim 1 wherein the amount of said compound (a) in said synthetic polymer is sufficient to cause substantial covalent coupling of the polymer to said polysaccharide, yet insufficient to cause substantial loss of porosity of the modified polysaccharide.

4. The material of claim 3 wherein said polymer contains more of said compound (b) than of said compound (a).

5. The material of claim 4 wherein the ratio of said compound (b) to said compound (a) is about 88—96% by weight of (b) to 4—12% by weight of (a).

6. The material of claim 1 wherein said synthetic polymer is cross-linked.

7. The material of claim 6 wherein said cross-linking is provided by means of bifunctional reagents capable of reacting with at least two nitrogen atoms per reagent.

8. The material of claim 7 wherein said reagent is

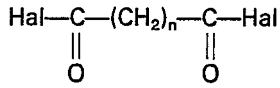

or

$$Hal—(CH_2)_n—Hal,$$

where Hal is a halogen atom, or

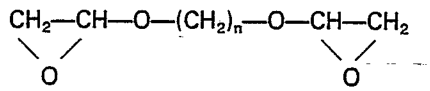

and n is 2 to 12.

9. A self-supporting cellulosic fibrous matrix which comprises the material of claim 1.

10. The matrix of claim 9 which also comprises highly refined cellulose pulp with a Canadian Standard Freeness of between +100 to −600 ml.

11. The matrix of claim 9 which also comprises a particulate.

12. The matrix of claim 9 which is in the form of a sheet.

13. A process for preparing the modified polysaccharide material of claim 1 which comprises:

(1) polymerizing said compound (a) with said compound (b) in the presence of said polysaccharide, under temperature conditions insufficient to cause the covalent bonding of said compound (a) to said polysaccharide, to thereby form a synthetic polymer of (a) and (b);

(2) reacting said polysaccharide with the chemical group of compound (a) in said synthetic polymer under temperature conditions sufficient to cause said covalent bonding.

14. The process of claim 13 wherein said step (2) is carried out at a temperature which is higher than that used for step (1).

15. The process of claim 13 wherein said compound (a) carries nitrogen atom-containing groups and which further comprises the step of cross-linking said synthetic polymer with a bifunctional cross-linking agent capable of reacting with at least two nitrogen atoms per reagent.

16. The material of claim 1 wherein said synthetic polymer comprises a copolymer of diethylaminoethyl methacrylate and glycidyl methacrylate.

17. The material of claim 1 wherein said cooplymer is quarternized with a quarternizing agent selected from the group consisting of 1-chloro-2-propanol, 1,2-dichloro-2-propanol, methyl chloroacetate, chloroethyldiethylamine, and ethyl iodide.

18. A process for effecting chromatographic separation of at least two compounds of a sample comprising contacting said sample with a self-supporting fibrous matrix comprising a modified polysaccharide material according to claim 1.

19. The process of claim 18 wherein compound (a) is selected from the group consisting of glycidyl acrylate, glycidyl methacrylate, 4,5-epoxypentylacrylate, 4-(2,3)-epoxypropyl-N-butyl-methacrylate, 9-10-epoxystearyl acryalte, 4-(2,3-epoxypropyl)-cyclohexyl methacrylate, allyl glycidyl ether and ethylene glycol-monoglycidyl-etheracrylate.

20. The process of claim 18 wherein said synthetic polymer comprises a copolymer of diethylaminoethyl methacrylate and glycidyl methacrylate.

21. The process of claim 20, wherein said copolymer of glycidyl methacrylate and diethylaminoethyl methacrylate is in its quarternized form.

22. The process of claim 21 wherein said copolymer is quarternized with a quarternizing agent selected from the group consisting of 1-chloro-2-propanol, 1,2-dichloro-2-propanol, methyl chloroacetate, chlorethyl-diethylamine and ethyl iodide.

23. The material of claim 1 wherein compound (a) is selected from the group consisting of glycidyl acrylate, glycidyl methacrylate, 4,5-epoxy-pentylacrylate, 4-(2,3)-epoxypropyl-N-butyl-methacrylate, 9,10-epoxystearyl acrylate, 4-(2,3-epoxypropyl)-cyclohexyl methacrylate, allyl glycidyl ether and ethylene glycol-monoglycidyl-etheracrylate.

24. The material of claim 7 wherein said bifunctional cross-linking agent is selected from:

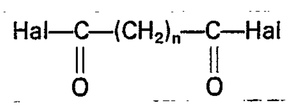

or

$$Hal—(CH_2)_n—Hal$$

wherein Hal is a halogen atom or

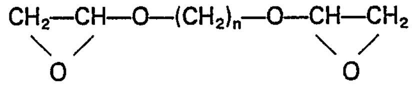

and n is 2 to 12.

**Patentansprüche**

1. Modifiziertes Polysaccharidmaterial, umfassend

(1) ein wasserunlösliches Polysaccharid, das kovalent an ein synthetisches Polymer gebunden ist;

(2) wobei das synthetische Polymer ein Copolymer, hergestellt durch eine radikalische Polymerisation

(a) einer polymerisierbaren Verbindung, enthaltend eine Epoxygruppe, die direkt kovalent mit einer Hydroxylgruppe des Polysaccharids kuppeln kann, und

(b) einer polymerisierbaren Verbindung mit der Formel

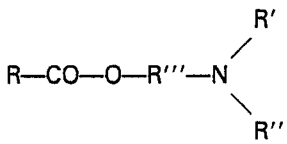

worin R ein alpha, beta-ethylenisch ungesättigtes polymerisierbarer Rest ist,

R' und R'' die gleichen oder verschiedene $C_1$—$C_6$ Alkyl- oder Alkanoylgruppen sind und

R''' eine direkte Bindung oder eine $C_2$—$C_3$ Alkylgruppe ist, und

worin R' und R'' zusammen mit dem N-Atom einen heterocyclischen Ring bilden können, umfaßt.

2. Material nach Anspruch 1, worin das Polysaccharid Cellulose ist.

3. Material nach Anspruch 1, worin die die Menge der Verbindung (a) in dem synthetischen Polymer ausreichend ist, um eine wesentliche kovalente Kupplung des Polymers mit dem Polysaccharid zu bewirken, jedoch unzureichend ist, um einen wesentlichen Porösitätsverlust des modifizierten Polysaccharids zu bewirken.

4. Material nach Anspruch 3, worin das Polymer mehr an Verbindung (b) als an Verbindung (a) enthält.

5. Material nach Anspruch 4, worin das Verhältnis der Verbindung (b) zu der Verbindung (a) etwa 88 bis 96 Gew.-% (b) zu 4 bis 12 Gew.-% (a) beträgt.

6. Material nach Anspruch 1, worin des synthetische Polymer vernetzt ist.

7. Material nach Anspruch 6, worin die Vernetzung mittels bifunktioneller Reagenzien, die mit wenigstens zwei Stickstoffatomen pro Reagenz reagieren können, vorgesehen ist.

8. Material nach Anspruch 7, worin das Reagenz

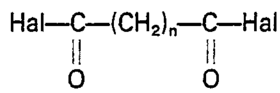

oder

$$Hal—(CH_2)_n—Hal,$$

ist, worin Hal ein Halogenatom oder

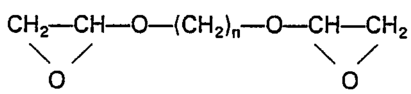

ist und n 2 bis 12 ist.

9. Selbsttragende, faserige Cellulosematrix, die das Material nach Anspruch 1 umfaßt.

10. Matrix nach Anspruch 9, die ebenfalls sehr fein gemahlene Cellulosepulpe mit einer Canadian Standard Freeness zwischen +100 bis −600 ml umfaßt.

11. Matrix nach Anspruch 9, die ebenfalls einem teilchenförmigen Stoff umfaßt.

12. Matrix nach Anspruch 9, die in Form einer Bahn ist.

13. Verfahren zur Herstellung des modifizierten Polysaccharidmaterials nach Anspruch 1, bei dem

(1) die Verbindung (a) mit der Verbindung (b) in Gegenwart des Polysaccharids unter Temperaturbedingungen, die unzureichend sind, um die kovalente Bindung der Verbindung (a) zu dem Polysaccharid zu bewirken, polymerisiert wird, um dadurch ein synthetisches Polymer aus (a) und (b) zu bilden;

(2) das Polysaccharid mit der chemischen Gruppe der Verbindung (a) in dem synthetischen Polymer unter Temperaturbedingungen, die ausreichend sind, um die kovalente Bindung zu bewirken, umgesetzt wird.

14. Verfahren nach Anspruch 13, worin die Stufe (2) bei einer Temperatur durchgeführt wird, die höher ist als diejenige, die für die Stufe (1) verwendet wird.

15. Verfahren nach Anspruch 13, worin die Verbindung (a) stickstoffatomhaltige Gruppen trägt und das weiterhin eine Vernetzung des synthetischen Polymers mit einem bifunktionellen Vernetzungsmittel, das mit wenigstens zwei Stickstoffatomen pro Reagenz reagieren kann, umfaßt.

16. Material nach Anspruch 1, worin das synthetische Polymer ein Copolymer aus Diethylaminoethylmethacrylat und Glycidylmethacrylat umfaßt.

17. Material nach Anspruch 1, worin das Copolymer mit einem Quaternisierungsmittel, gewählt aus der Gruppe, bestehend aus 1-Chlor-2-propanol, 1,2-Dichlor-2-propanol, Methylchloracetat, Chlorethyldiethylamin und Ethyljodid, quaternisiert ist.

18. Verfahren zur Bewirkung einer chromatographischen Trennung von wenigstens zwei Verbindungen einer Probe, bei dem die Probe mit einer selbsttragenden faserigen Matrix, umfassend ein modifiziertes Polysaccharidmaterial nach Anspruch 1, in Berührung gebracht wird.

19. Verfahren nach Anspruch 18, worin die Verbindung (a) aus der Gruppe, bestehend aus Glycidylacrylat, Glycidylmethacrylat, 4,5-Epoxypentylacrylat, 4-(2,3)-Epoxypropyl-N-butylmethacrylat, 9-10 - Epoxystearylacrylat, 4 - (2,3 - Epoxypropyl)cyclohexylmethacrylat, Allylglycidylether und Ethylenglycolmonoglycidyletheracrylat, gewählt wird.

20. Verfahren nach Anspruch 18, worin das synthetische Polymer ein Copolymer aus Diethylaminoethylmethacrylat und Glycidylmethacrylat umfaßt.

21. Verfahren nach Anspruch 20, worin das Copolymer aus Glycidylmethacrylat und Diethylaminoethylmethacrylat in seiner quaternisierten Form ist.

22. Verfahren nach Anspruch 21, worin das Copolymer mit einem Quaternisierungsmittel, gewählt aus der Gruppe, bestehend aus 1 - Chlor - 2 - propanol, 1,2 - Dichlor - 2 - propanol, Methylchloracetat, Chlorethyldiethylamin und Ethyljodid, quaternisiert wird.

23. Material nach Anspruch 1, worin die Verbindung (a) aus der Gruppe, bestehend aus Glycidylacrylat, Glycidylmethacrylat, 4,5 - Epoxy - pentylacrylat, 4 - (2,3) - Epoxypropyl - N - butylmethacrylat, 9,10-Epoxystearylacrylat, 4-(2,3-Epoxypropyl)cyclohexylmethacrylat, Allylglycidylether und Ethylenglycolmonoglycidyletheracrylat, gewählt wird.

24. Material nach Anspruch 7, worin das bifunktionelle Vernetzungsmittel aus

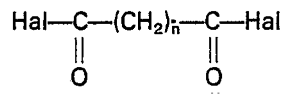

oder

$$Hal-(CH_2)_n-Hal$$

gewählt wird, worin Hal ein Halogenatom oder

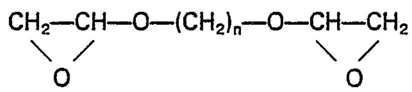

ist und n 2 bis 12 ist.

**Revendications**

1. Matière de polysaccharide modifié qui comprend:

(1) un polysaccharide insoluble dans l'eau lié par covalence à un polymère synthétique;

(2) ce polymère synthétique comprenant un copolymère préparé par polymérisation radicalaire

(a) d'un composé polymérisable comprenant un groupe époxy capable de se coupler directement par covalence à un groupe hydroxy de ce polysaccharide, et un groupe vinyle capable de polymérisation radicalaire; et

(b) d'un composé polymérisable répondant à la formule:

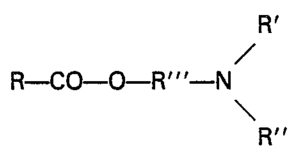

dans laquelle R est un radical polymérisable à insaturation alpha, béta-éthylénique,

R' et R'' sont des groupes alkyle ou alcanoyle en $C_1$ à $C_6$ identiques ou différents, et

R''' est une liaison directe ou un groupe alkyle en $C_2$ à $C_3$, et

dans lequel R' et R'' peuvent former avec l'atome de N un cycle hétérocyclique.

2. Matière de la revendication 1, dans laquelle ce polysaccharide est la cellulose.

3. Matière de la revendication 1, dans laquelle la quantité de ce composé (a) dans ce polymère synthétique est suffisante pour provoquer un couplage substantiel par covalence du polymère à ce polysaccharide, mais insuffisante pour causer une perte notable de porosité du polysaccharide modifié.

4. Matière de la revendication 3, dans laquelle ce polymère contient plus de ce composé (b) que de ce composé (a).

5. Matière de la revendication 4, dans laquelle le rapport de ce composé (b) à ce composé (a) est d'environ 88 à 96% en poids de (b) à 4 à 12% en poids de (a).

6. Matière de la revendication 1, dans laquelle ce polymère synthétique est réticulé.

7. Matière de la revendication 6, dans laquelle celle réticulation est réalisée au moyen de réactifs bifonctionnels capable de réagir avec au moins deux atomes d'azote par réactif.

8. Matière de la revendication 7, dans laquelle ce réactif est

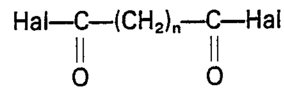

ou

$$Hal—(CH_2)_n—Hal,$$

où Hal est un atomes d'halogène, ou

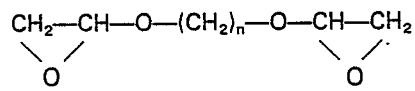

et n est 2 à 12.

9. Matrice fibreuse cellulosique auto-portante qui comprend la matière de la revendication 1.

10. Matrice de la revendication 9, qui comprend également une pâte de cellulose hautement raffinée ayant un degré d'engraissement Canadian Standard compris entre +100 et −600 ml.

11. Matrice de la revendication 9, qui comprend aussi une matière particulaire.

12. Matrice de la revendication 9, qui est sous la forme d'une feuille.

13. Procédé de préparation de la matière de polysaccharide modifié de la revendication 1, qui comprend:

(1) la polymérisation de ce composé (a) avec ce composé (b) en présence de ce polysaccharide, dans des conditions de température insuffisantes pour causer la liaison par covalence de ce composé (a) à ce polysaccharide, pour former un polymère synthétique de (a) et de (b);

(2) la réaction de ce polysaccharide avec le groupe chimique du composé (a) dans ce polymère synthétique dans des conditions de température suffisantes pour causer la liaison par covalence.

14. Procédé de la revendication 13, dans lequel ce stade (2) est effectué à une température qui est supérieure à celle utilisée pour le stade (1).

15. Procédé de la revendication 13, dans lequel ce composé (a) porte des groupes contenant des atomes d'azote, et qui comprend en outre le stade de réticulation de ce polymère synthétique avec un agent réticulant bifonctionnel capable de réagir avec au moins deux atomes d'azote par réactif.

16. Matière de la revendication 1, dans laquelle ce polymère synthétique comprend un copolymère de méthacrylate de diéthylaminoéthyle et de méthacrylate de glycidyle.

17. Matière de la revendication 1, dans laquelle ce copolymère est quaternisé avec un agent de quaternisation choisi dans le groupe constitué du 1-chloro-2-propanol, du 1,2-dichloro-2-propanol, du chloracétate de méthyle, de la chloréthyldiéthylamine et de l'iodure de méthyle.

18. Procédé pour effectuer une séparation chromatographique d'au moins deux composés d'un échantillon, comprenant la mise en contact de cet échantillon avec une matrice fibreuse auto-portante comprenant une matière de polysaccharide modifié suivant la revendication 1.

19. Procédé de la revendication 18, dans lequel le composé (a) est choisi dans le groupe constitué de l'acrylate de glycidyle, du méthacrylate de glycidyle, de l'acrylate de 4,5-époxypentyle, du méthacrylate de 4-(2,3)-époxypropyl-N-butyle, de l'acrylate de 9,10-époxystéaryle, du méthacrylate de 4-(2,3)-époxypropyl)-cyclohexyle, de l'éther allyl glycidylique et de l'acrylate de l'éther monoglycidylique de l'éthylène glycol.

20. Procédé de la revendication 18, dans lequel ce polymère synthétique comprend un copolymère du méthacrylate de diéthylaminoéthyle et du méthacrylate de glycidyle.

21. Procédé de la revendication 20, dans lequel ce copolymère de méthacrylate de glycidyle et de méthacrylate de diéthylaminoéthyle est sous sa forme quaternisée.

22. Procédé de la revendication 21, dans lequel ce copolymère est quaternisé avec un agent de quaternisation choisi dans le groupe constitué du 1-chloro-2-propanol, du 1,2-dichloro-2-propanol, du chloracétate de méthyle, de la chloréthyl-diéthylamine et de l'iodure d'éthyle.

23. Matière de la revendication 1, dans laquelle le composé (a) est choisi dans le groupe constitué de

l'acrylate de glycidyle, du méthacrylate de glycidyle, de l'acrylate de 4,5-époxy-pentyle, du méthacrylate de 4-(2,3)-époxypropyl-N-butyle, de l'acrylate de 9,10-époxystéaryle, du méthacrylate de 4-(2,3-époxypropyl)-cyclohexyle, de l'éther allyl glycidylique et de l'acrylate de l'éther monoglycidylique de l'éthylène glycol.

24. Matière de la revendication 7, dans laquelle cet agent de réticulation bifonctionnel est choisi parmi:

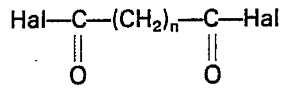

ou

$$Hal—(CH_2)_n—Hal$$

où Hal est un atome d'halogène ou

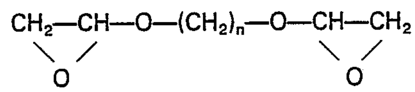

et n est 2 à 12.

Fig.1A

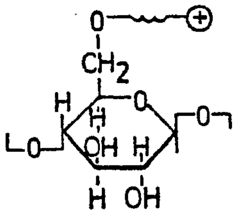

CELLULOSE

Fig.1B

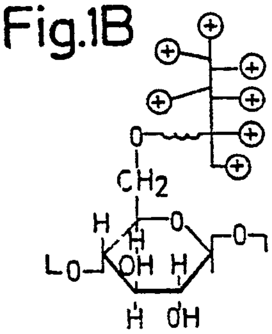

CELLULOSE

Fig. 2

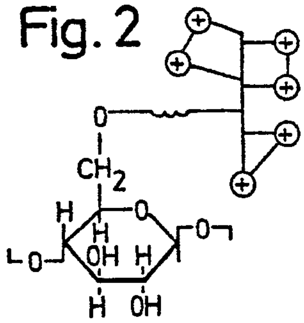

CELLULOSE

Fig.3

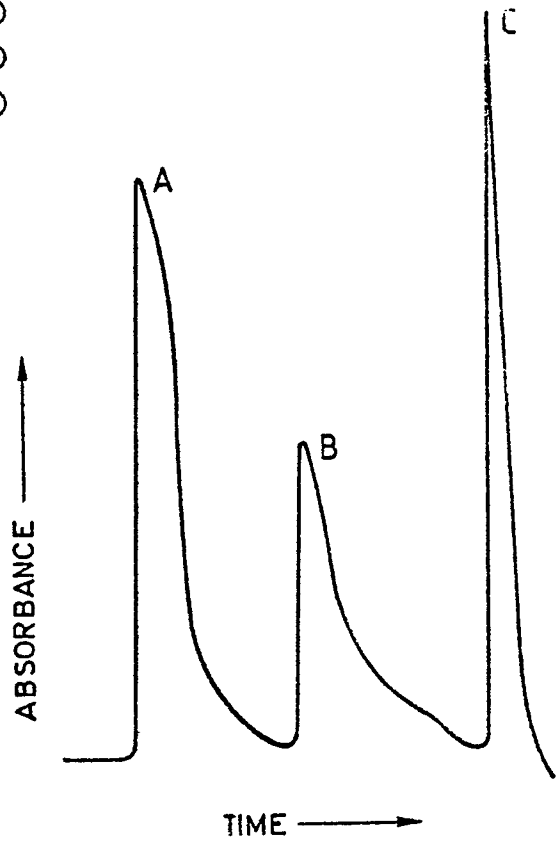

Fig.4

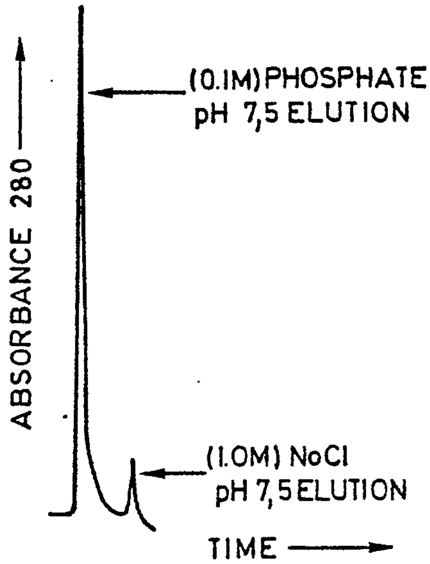


Fig.5

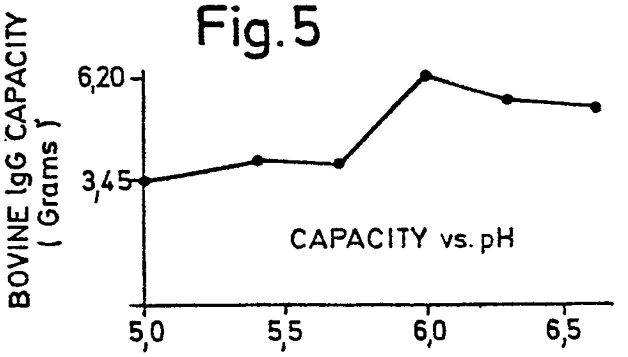


Fig.6